(19) **Europäisches Patentamt / European Patent Office / Office européen des brevets**

(11) **EP 4 597 957 A1**

(12) **EUROPEAN PATENT APPLICATION**
published in accordance with Art. 153(4) EPC

(43) Date of publication:
06.08.2025 Bulletin 2025/32

(21) Application number: 22960411.1

(22) Date of filing: 30.09.2022

(51) International Patent Classification (IPC):
*H04L 27/00* (2006.01)

(52) Cooperative Patent Classification (CPC):
H04L 27/00

(86) International application number:
PCT/CN2022/123569

(87) International publication number:
WO 2024/065800 (04.04.2024 Gazette 2024/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: FUJITSU LIMITED
Kawasaki-shi, Kanagawa 211-8588 (JP)

(72) Inventors:
• WANG, Xin
Beijing 100022 (CN)
• ZHANG, Qun
Beijing 100022 (CN)
• ZHANG, Jian
Beijing 100022 (CN)

(74) Representative: Haseltine Lake Kempner LLP
Cheapside House
138 Cheapside
London EC2V 6BJ (GB)

(54) **CHANNEL STATE INFORMATION FEEDBACK METHOD AND APPARATUS**

(57) Embodiments of the present application provide a method and an apparatus for feeding back channel state information. The method includes: a terminal equipment receives a reporting configuration from a network device, wherein the reporting configuration includes codebook indication information and feedback configuration information; measuring a channel state information reference signal to obtain channel state information; processing the channel state information according to the codebook indication information and the feedback configuration information to obtain a first channel state information; and feeding back the first channel state information to the network device.

**Fig. 2**

**Description**

Technical Field

Embodiments of the present application relate to the technical field of communications.

Background

Multi-antenna technology has been widely applied in LTE, LTE-A, and 5G NR systems. In particular, large-scale antenna technology (massive MIMO) is very well supported in the 5G standard. It may be predicted that in the 5G-Advanced stage and 6G stage, massive MIMO technology will be more widely used, and large-scale and ultra-large scale antenna technology with enhanced performance is also the research focus of the next generation mobile communication system.

With the development of Artificial Intelligence (AI) and Machine Learning (ML) technologies, applying the AI/ML technologies to wireless communication to solve the difficulties of traditional methods has become a current technical direction. The application of AI/ML models in a wireless communication system, especially in the transmission of air interfaces, is a new technology in 5G-Advanced and 6G stages.

For example, for measurement and feedback of Channel State Information (CSI), the CSI is measured at terminal equipment, and the AI/ML models are used to generate CSI feedback information which is then transmitted to a network device through an air interface, and thereafter the network device receives the CSI feedback information, and original CSI is recovered by the corresponding AI/ML model. In such an example, CSI feedback overhead may be reduced by the AI/ML models, or quality of feedback may be improved, thereby improving communication quality.

For another example, similarly, after information of a transmitting side (a network device or terminal equipment) is processed by the AI/ML model, it is transmitted to a receiving side (terminal equipment or network device) through an air interface, and the receiving side uses a model corresponding to the AI/ML model of the transmitting side to recover the information input by the transmitting side to the AI/ML model, and this type of AI/ML model is often referred to as a two-sided model.

It should be noted that, the above introduction to the background is merely for the convenience of clear and complete description of the technical solution of the present application, and for the convenience of understanding of persons skilled in the art. It cannot be regarded that the above technical solution is commonly known to persons skilled in the art just because that the solution has been set forth in the backgroud of the present application.

Summary

However, the inventor has found that there is a situation where channel state information obtained by a network device is inaccurate. For example, the channel state information obtained by the network device differs significantly from an actual downlink channel that will use the channel state information for information transmission, resulting in a decrease in gain or no gain in precoding. Therefore, high-resolution channel state information feedback is needed for the network device to verify resolution of channel state information feedback.

To address at least one of the above problems, embodiments of the present application provide a method and an apparatus for feeding back channel state information.

According to an aspect of an embodiment of the present application, there is provided with a method for feeding back channel state information, including:

a terminal equipment receives a reporting configuration from a network device, wherein the reporting configuration includes codebook indication information and feedback configuration information;
the terminal equipment measures a channel state information reference signal to obtain channel state information;
processing the channel state information according to the codebook indication information and the feedback configuration information to obtain a first channel state information; and
feeding back the first channel state information to the network device.

According to another aspect of the embodiment of the present application, there is provided with an apparatus for feeding back channel state information, including:

a receiving unit configured to receive a reporting configuration from a network device, wherein the reporting configuration includes codebook indication information and feedback configuration information;
a processing unit configured to measure a channel state information reference signal to obtain channel state information, and process the channel state information according to the codebook indication information and the feedback configuration information to obtain a first channel state information; and
a transmitting unit configured to feed back the first channel state information to the network device.

According to another aspect of the embodiment of the present application, there is provided with a method for feeding back channel state information, including:

a terminal equipment receives a first reporting configuration from a network device, the first reporting configuration including feedback configuration information and similarity indication information for configuring a terminal equipment to report channel state information similarity;
the terminal equipment measures a channel state information reference signal to obtain channel state information; processing the channel state information according to the feedback configuration information to obtain first channel state information, and calculating similarity information based on channel state information to which the feedback configuration information corresponds; and
feeding back the first channel state information and/or the similarity information to the network device.

According to another aspect of the embodiment of the present application, there is provided with an apparatus for feeding back channel state information, including:

a receiving unit configured to receive first reporting configuration from a network device, the first reporting configuration including feedback configuration information and similarity indication information for configuring a terminal equipment to report channel state information similarity;
a processing unit configured to measure channel state information reference signal to obtain channel state information, process the channel state information according to the feedback configuration information to obtain first channel state information, and calculate similarity information based on channel state information to which the feedback configuration information corresponds; and
a transmitting unit configured to feed back the first channel state information and/or the similarity information to the network device.

According to another aspect of the embodiment of the present application, there is provided with a method for feeding back channel state information, including:

a terminal equipment receives similarity requirement information from a network device;
estimating feedback configuration information used for channel state information reporting according to the similarity requirement information, and feeding back the feedback configuration information to the network device;
the terminal equipment receives reporting configuration information of first channel state information transmitted by the network device, wherein the reporting configuration information is generated by the network device according to the feedback configuration information fed back by the terminal equipment;
the terminal equipment measures a channel state information reference signal to obtain channel state information; the terminal equipment processes the channel state information according to the reporting configuration information and/or the feedback configuration information to obtain the first channel state information; and
feeding back the first channel state information to the network device.

According to another aspect of the embodiment of the present application, there is provided with an apparatus for feeding back channel state information, including:

a receiving unit configured to receive similarity requirement information from a network device;
a processing unit configured to estimate feedback configuration information used for channel state information reporting according to the similarity requirement information; and
a transmitting unit configured to feed back the feedback configuration information to the network device;
the receiving unit further receiving reporting configuration information of first channel state information transmitted by the network device, wherein the reporting configuration information is generated by the network device according to the feedback configuration information fed back by the terminal equipment;
the processing unit measuring a channel state information reference signal to obtain channel state information, and processing the channel state information according to the reporting configuration information and/or the feedback configuration information to obtain the first channel state information; and
the transmitting unit feeding back the first channel state information to the network device.

One of the beneficial effects of the embodiments of the present application includes: the terminal equipment receives a reporting configuration from the network device, wherein the reporting configuration includes codebook indication information and feedback configuration information; the terminal equipment processes the channel state information according to the codebook indication information and the feedback configuration information to obtain a first channel state information; and feeds back the first channel state information to the network device. As a result, the network device can obtain more accurate CSI, thereby improving CSI feedback resolution.

With reference to the specification and drawings below, a specific embodiment of the present application is disclosed in detail, which specifies the manner in which the principle of the present application can be adopted. It should be understood that, the scope of the embodiment of the present application is not limited. Within the scope of the spirit and clause of the appended claims, the embodiment of the present application includes many variations, modifications and equivalents.

The features described and/or shown for one embodiment can be used in one or more other embodiments in the same or similar manner, can be combined with the features in other embodiments or replace the features in other embodiments.

It should be emphasized that, the term "include/comprise" refers to, when being used in the text, existence of features, parts, steps or assemblies, without exclusion of existence or attachment of one or more other features, parts, steps or assemblies.

Brief Description of the Drawings

Elements and features described in one of the drawings or embodiments of the present application may be combined with the elements and features shown in one or more other drawings or embodiments. Moreover, in the drawings, similar reference signs indicate corresponding parts in several drawings and may be used to indicate corresponding parts used in more than one embodiment.

FIG. 1 is a schematic diagram of a communication system in the embodiments of the present application;
FIG. 2 is a schematic diagram of a method for feeding back channel state information in the embodiments of the present application;
FIG. 3 is an exemplary diagram of feeding back channel state information in the embodiments of the present application;
FIG. 4 is a schematic diagram of a method for feeding back channel state information in the embodiments of the present application;
FIG. 5 is an exemplary diagram of feeding back channel state information in the embodiments of the present application;
FIG. 6 is an exemplary diagram of feeding back channel state information in the embodiments of the present application;
FIG. 7 is another exemplary diagram of feeding back channel state information in the embodiments of the present application;
FIG. 8 is a schematic diagram of a method for feeding back channel state information in the embodiments of the present application;
FIG. 9 is a schematic diagram of an apparatus for feeding back channel state information in the embodiments of the present application;
FIG. 10 is another schematic diagram of an apparatus for feeding back channel state information in the embodiments of the present application;
FIG. 11 is a schematic diagram of a network device in the embodiments of the present application;
FIG. 12 is a schematic diagram of a terminal equipment in the embodiments of the present application.

Detailed Description

With reference to the drawings, the foregoing and other features of the present application will become apparent through the following specification. The Description and drawings specifically disclose the particular embodiment of the present application, showing part of the embodiment in which the principle of the present application can be adopted, it should be understood that the present application is not limited to the described embodiment, on the contrary, the present application includes all modifications, variations and equivalents that fall within the scope of the appended claims.

In embodiments of the present application, the terms "first", "second", etc., are used to distinguish different elements by their appellation, but do not indicate the spatial arrangement or chronological order of these elements, etc., and these elements shall not be limited by the terms. The term "and/or" includes any and all combinations of one or more of the terms listed in association with the term. The terms "contain", "include", "have", etc., refer to the presence of the stated feature, element, component or assembly, but do not exclude the presence or addition of one or more other features, elements, components or assemblies.

In the embodiments of the present application, the singular forms "one", "the", etc., including the plural forms, shall be broadly understood as "a sort of" or "a kind of" and not limited to the meaning of "one"; furthermore, the term "said" shall be understood to include both the singular form and the plural form, unless it is expressly indicated otherwise in the context. In addition, the term "according to" should be understood to mean "at least partially according to ...", and the term "based on" should be understood to mean "based at least partially on ...", unless it is expressly indicated otherwise in the context.

In embodiments of the present application, the term "communications network" or "wireless communications network" may refer to a network that complies with any of the following communication standards, such as Long Term Evolution (LTE), Enhanced Long Term Evolution (LTE-A), Wideband Code Division Multiple Access (WCDMA), High-Speed Packet Access (HSPA), etc.

In addition, the communication between the devices in the communication system can be carried out according to the communication protocol of any stage, for example, including but not being limited to 1G (generation), 2G, 2.5G, 2.75G, 3G, 4G, 4.5G and 5G, New Radio (NR), future 6G and etc., and/or other communication protocols currently known or to be developed in the future.

In the embodiments of the present application, the term "network device" refers to, for example, a device in the communication system that connects a terminal equipment to the communication network and provides services to the terminal equipment. The network device may include but is not limited to: a base station (BS), an access point (AP), a transmission reception point (TRP), a broadcast transmitter, a mobile management entity (MME), a gateway, a server, a radio network controller (RNC), a base station controller (BSC), etc.

The base station may include, but is not limited to, a node B (NodeB or NB), an evolution node B (eNodeB or eNB), 5G base station (gNB), an IAB donor, etc., and may also include a remote radio head (RRH), a remote radio unit (RRU), a relay, or a low-power node (such as femto, pico, etc.). And the term "base station" may include some or all of their functions, with each base station providing communication coverage to a specific geographic area. The term "cell" can refer to a base station and/or its coverage area, depending on the context in which the term is used.

In the embodiments of the present application, the term "user equipment" (UE) or "terminal equipment or terminal device" (TE) refers, for example, to a device that is connected to the communication network through the network device and receives network services. The terminal equipment can be fixed or movable, and can also be called a mobile station (MS), a terminal, a subscriber station (SS), an access terminal (AT), a station, etc.

The terminal equipment may include but is not limited to: a cellular phone, a personal digital assistant (PDA), a wireless modem, a wireless communication device, a handheld device, a machine-type communication device, a laptop computer, a cordless phone, a smart phone, a smart watch, a digital camera, etc.

For another example, in scenarios such as Internet of Things (IoT), the terminal equipment may also be a machine or an apparatus that performs monitoring or measurement, and may include, but is not limited to, a machine type communication (MTC) terminal, a vehicle communication terminal, a device to device (D2D) terminal, a machine to machine (M2M) terminal, and etc.

In addition, the term "network side" or "network device side" refers to the side of the network, which may be a base station or may include one or more network devices as described above. The term "user side" or "terminal side" or "terminal equipment side" refers to the side of the user or terminal, which may be a UE or may include one or more terminal equipments as described above. Without specifically indicated, "device" can refer to a network device or a terminal equipment.

Hereinafter the scenarios of in the embodiments of the present application are illustrated by examples, but which is not limited in the present application.

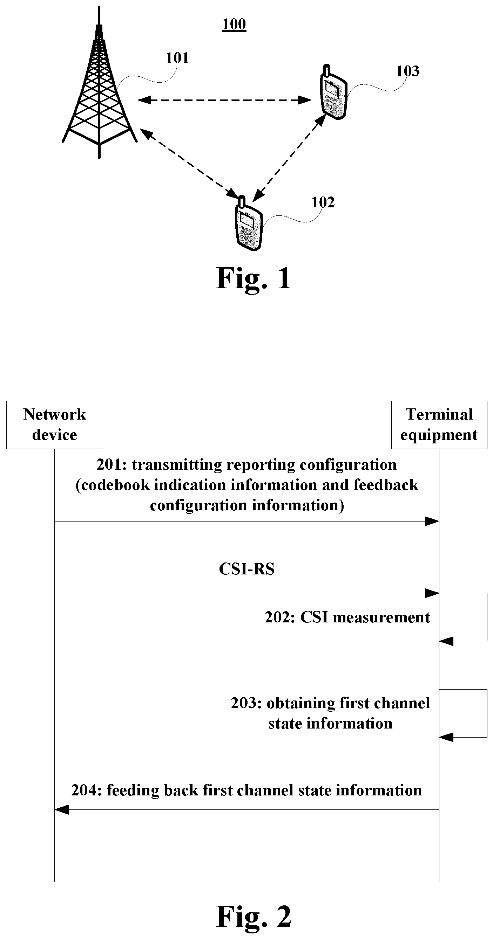

FIG. 1 is a schematic diagram of a communication system in the embodiments of the present application, illustrating the case of the terminal equipment and the network device as examples. As shown in FIG. 1, the communication system 100 may include a network device 101 and terminal equipments 102 and 103. For simplicity, FIG. 1 illustrates only two terminal equipments and one network device as examples, but which is not limited in the embodiment of the present application.

In the embodiments of the present application, existing services or services that can be implemented in the future may be transmitted between the network device 101 and the terminal equipments 102, 103. For example, these services may include, but are not limited to, enhanced Mobile Broadband (eMBB), massive Machine Type Communication (mMTC), and Ultra-Reliable and Low-Latency Communication (URLLC), and etc.

It is worth noting that FIG. 1 shows that two terminal equipments 102 and 103 are within the coverage of the network equipment 101, but which is not limited in the present application. Both of the two terminal equipments 102 and 103 may not be within the coverage of the network device 101, or one terminal equipment 102 is within the coverage of the network device 101 and the other terminal equipment 103 is outside the coverage of the network device 101.

In the embodiments of the present application, a higher layer signaling may be, for example, Radio Resource Control (RRC) signaling; for example, it is called an RRC message, e.g., including MIB, system information, and a dedicated RRC message; or it is referred to as RRC information element (RRC IE). For example, the higher layer signaling may also be Medium Access Control (MAC) signaling; or is also called MAC control element (MAC CE). However, the present application is not limited to this.

In the embodiments of the present application, one or more AI/ML models may be configured and run in the network device and/or the terminal equipment. The AI/ML models may be used in various signal processing functions of wireless communication, such as CSI estimation and reporting, beam management and beam prediction, etc. The present application is not limited to this.

The network device configures the terminal equipment to feed back the CSI information, especially channel state information used for downlink precoding thereof, such as precoding matrix indication (PMI). In a traditional method, the terminal equipment uses codebook-based codebook index to provide feedback, such as feedback based on Rel-15 Type 1, Type2 codebook, or feedback based on Rel-16 Type2 codebook, or based on Rel-17 and Rel-18 codebooks, etc., as well as a quantized codebook vector and corresponding indication information for a wireless channel between the network device and the terminal equipment that is defined in subsequent Release or 6G. Considering mobility of the terminal equipment and time delay of the feedback channel, there may be a poor matching between the channel feedback received by the network device and the channel experienced by the pre-coded transmission signal based on this feedback.

On the other hand, due to high feedback overhead when using channel state information with high quantization resolution, the terminal equipment may use an AI/ML algorithm to compress the channel state information and feed back the compressed and quantized information to the network device. The network device utilizes a decompression model corresponding to the terminal equipment to recover the channel state information.

However, the above processes may all result in a situation where channel state information obtained by a network device is inaccurate. For example, the channel state information obtained by the network device differs significantly from an actual downlink channel that will use the channel state information for information transmission, resulting in a decrease in gain or no gain in precoding. Therefore, high-resolution channel state information feedback is needed for the network device to verify resolution of channel state information feedback.

Embodiments of First Aspect

Embodiments of the present application provide a method for feeding back channel state information (CSI). FIG. 2 is a schematic diagram of a method for feeding back channel state information in the embodiments of the present application, as shown in FIG. 2, the method including:

> 201: a terminal equipment receives a reporting configuration from a network device, wherein the reporting configuration includes codebook indication information and feedback configuration information;
> 202: the terminal equipment measures a channel state information reference signal to obtain channel state information;
> 203: the terminal equipment processes the channel state information according to the codebook indication information and the feedback configuration information to obtain a first channel state information; and
> 204: the terminal equipment feeds back the first channel state information to the network device.

It is worth noting that FIG. 2 above only schematically illustrates the embodiments of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 2 above.

In the embodiments of the present application, the network device configures not only codebook indication information but also feedback configuration information, so that the terminal equipment may obtain more information and thereafter high-resolution CSI (first channel state information) is generated, which may be used for verification of the AI/ML model, and for example, the high-resolution CSI may be used as label data of the AI/ML model. As a result, the network device may obtain more accurate CSI, thereby improving CSI feedback resolution.

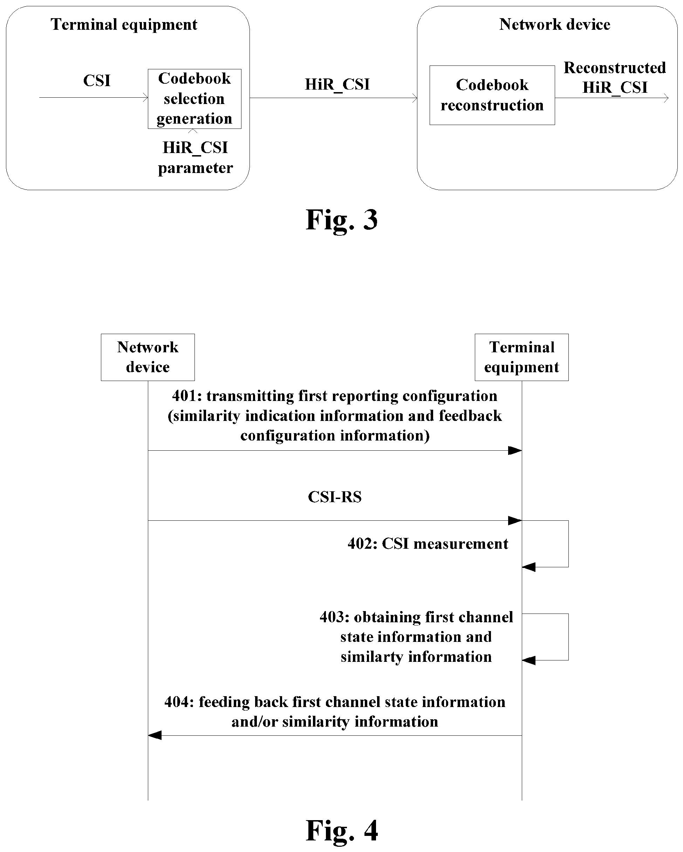

FIG. 3 is an exemplary diagram of feeding back channel state information in the embodiments of the present application. As shown in FIG. 3, after obtaining the channel state information, the terminal equipment may make codebook selection and generate HiR_CSI (first channel state information) based on the HiR_CSI parameters (such as parameters obtained based on the codebook indication information and/or the feedback configuration information). After receiving the HiR_CSI, the network device may perform codebook reconstruction and other operations, and use the reconstructed HiR_CSI as verification information (such as label data) of channel state information feedback.

In the embodiments of the present application, the network device may transmit CSI-RS to the terminal equipment, which makes the terminal equipment perform CSI measurement according to CSI-RS. The specific contents of CSI-RS, CSI measurement and its configuration can be seen by referring to the related art, and will not be repeated here.

In some embodiments, the feedback configuration information includes at least one of the following information: information on the number of DFT base vectors, information on the number of amplitude bits, information on the number of phase bits, information on a time-domain base vector, information on a Doppler base vector, related information on latency, or related information on the number of CSI feedback bits. The present application is not limited to the above information, and may include other information.

In some embodiments, the feedback configuration information is used to indicate a quantization mode of channel state information by the terminal equipment; and processing the channel state information includes: quantifying the channel state information and generating feedback bit information based on the feedback configuration information and according to a predefined rule in a codebook to which the codebook indication information corresponds.

For example, if the feedback configuration information includes the number of CSI feedback bits, the terminal equipment may quantify the channel state information according to the number of CSI feedback bits and generate feedback bit information.

For example, for the Type2 codebook, there are the following configuration parameters,

Table 1

| Parameters | meaning | values | |
|---|---|---|---|
| $P_{CSI-RS}$ | The number of CSI-RS ports | {4, 8, 12, 16, 24, 32} | |
| $v$ | RI value | {1, 2} | |
| $L$ | Number Of Beams | 2 | $P_{CSI-RS} = 4$ |
| | | {2, 3, 4} | $P_{CSI-RS} > 4$ |
| $N_1$ | The number of antenna in horizontal direction | 16 | |
| $N_2$ | The number of antenna in vertical direction | 1 | |
| $O_1$ | DFT Oversampling | 4 | |
| $O_2$ | DFT Oversampling | 1 | |
| $N_{PSK}$ | Phase Alphabet Size | {4, 8} | |
| subbandAmplitude | Subband Amplitude | 'true' or 'false' | |

For example, L denotes the number of DFT base vectors or DFT beams. According to the existing standard definition, its value may be up to 4. In order to improve the degree of similarity between the feedback information and the original information, or to improve the quantization resolution, a higher L value may be configured, such as 8, 10, 16, etc.

For Rel-16 e-Type2 codebook, there are further parameters as follows:

Table 2

| Parameters of e-TypeII codebook | | |
|---|---|---|
| Parameters | meaning | values |
| $R$ | Number Of PMI-Subbands Per CQI-Subband | {1,2} |
| $N_3$ | The total number of precoding matrices | Reference 38.214 5.2.2.2.5 |
| paramCombination-r16 | The higher layer parameter | {1,2,3,4,5,6,7,8} |

Table 3

| PMI of codebookType= e-TypeII | | | | | | |
|---|---|---|---|---|---|---|
| **Information fields $X_1$** | | | | | | |
| | $i_{1,1}$ | $i_{1,2}$ | | $i_{1,8,1}$ | | $i_{1,8,2}$ |
| Rank=1 $N_3 \leq 19$ | $\lceil \log_2(O_1 O_2) \rceil$ | $\left\lceil \log_2 \binom{N_1 N_2}{L} \right\rceil$ | | $\lceil \log_2 K^{NZ} \rceil$ | N/A | |
| Rank=2 $N_3 \leq 19$ | $\lceil \log_2(O_1 O_2) \rceil$ | $\left\lceil \log_2 \binom{N_1 N_2}{L} \right\rceil$ | | $\lceil \log_2(2L) \rceil$ | | $\lceil \log_2(2L) \rceil$ |
| **Information fields $X_2$** | | | | | | |
| | $i_{2,3,1}$ | $i_{2,3,2}$ | $i_{1,6,1}$ | $i_{1,6,2}$ | $\{i_{2,4,l}\}_{l=1,...,v}$ | $\{i_{2,5,l}\}_{l=1,...,v}$ | $\{i_{2,7,l}\}_{l=1,...,v}$ |
| Rank=1 $N_3 \leq 19$ | 4 | N/A | $\left\lceil \log_2 \binom{N_3 - 1}{M_1 - 1} \right\rceil$ | N/A | $3(K^{NZ} - 1)$ | $4(K^{NZ} - 1)$ | $2LM_1$ |
| Rank=2 $N_3 \leq 19$ | 4 | 4 | $\left\lceil \log_2 \binom{N_3 - 1}{M_2 - 1} \right\rceil$ | $\left\lceil \log_2 \binom{N_3 - 1}{M_2 - 1} \right\rceil$ | $3(K^{NZ} - 2)$ | $4(K^{NZ} - 2)$ | $4LM_2$ |

Table 4

| Codebook parameter configurations for L, β and $p_v$ | | | | |
|---|---|---|---|---|
| *paramCombination-r16* | L | $p_v$ | | β |
| | | $v \in \{1,2\}$ | $v \in \{3,4\}$ | |
| 1 | 2 | ¼ | 1/8 | ¼ |
| 2 | 2 | ¼ | 1/8 | ½ |
| 3 | 4 | ¼ | 1/8 | ¼ |
| 4 | 4 | ¼ | 1/8 | ½ |
| 5 | 4 | ¼ | ¼ | ¾ |
| 6 | 4 | ½ | ¼ | ½ |
| 7 | 6 | ¼ | - | ½ |
| 8 | 6 | ¼ | - | ¾ |

Here the definition to the above parameters may be seen by referring to the standard document 3GPP 38.214, which will not be explained.

Using a codebook defined based on the standard, an example may be given for the following set of parameters: For example, if the subband amplitude is quantized with 3 bits and other parameters are given in Table 5 below, the GCS and SGCS that may be obtained are shown in the last two columns of Table 5. Where pc in the first column denotes paramCombination-r16.

Table 5

| pc | L | Mv | P | beta | Reference amplitude | difference amplitude | phase | bit | GCS | SGCS |
|---|---|---|---|---|---|---|---|---|---|---|
| 1 | 2 | 4 | 0.25 | 0.25 | 4 | 3 | 4 | 62 | 0.7359 | 0.5701 |
| 2 | 2 | 4 | 0.25 | 0.5 | 4 | 3 | 4 | 91 | 0.7869 | 0.6399 |
| 3 | 4 | 4 | 0.25 | 0.25 | 4 | 3 | 4 | 111 | 0.8282 | 0.6999 |
| 4 | 4 | 4 | 0.25 | 0.5 | 4 | 3 | 4 | 168 | 0.876 | 0.7752 |
| 5 | 4 | 4 | 0.25 | 0.75 | 4 | 3 | 4 | 225 | 0.8871 | 0.7935 |
| 6 | 4 | 7 | 0.5 | 0.5 | 4 | 3 | 4 | 279 | 0.9104 | 0.8324 |

It can be seen that the highest square similarity SGCS is only 0.8324, which does not reach the resolution level as a label of model monitoring or training.

In order to improve the feedback resolution, parameters other than those supported by the standard may be used, or a part of parameters are parameters other than those supported by the standard, but the channel quantization and feedback are still carried out according to the criteria of the Rel-16 Type2 codebook, and the results shown in Table 6 are as follows.

Table 6

| Subband amplitude coefficient quantization 3bit | | | | | | | | | |
|---|---|---|---|---|---|---|---|---|---|
| L | Mv | P | beta | Reference amplitude | difference amplitude | phase | bit | GCS | SGCS |
| 5 | 7 | 0.5 | 0.5 | 4 | 3 | 4 | 345 | 0.9278 | 0.8631 |
| 6 | 7 | 0.5 | 0.5 | 4 | 3 | 4 | 408 | 0.9389 | 0.883 |
| 7 | 7 | 0.5 | 0.5 | 4 | 3 | 4 | 472 | 0.9454 | 0.8949 |
| 8 | 7 | 0.5 | 0.5 | 4 | 3 | 4 | 535 | 0.95 | 0.9036 |
| 9 | 7 | 0.5 | 0.5 | 4 | 3 | 4 | 598 | 0.9532 | 0.9095 |
| 10 | 7 | 0.5 | 0.5 | 4 | 3 | 4 | 661 | 0.9557 | 0.9142 |
| 11 | 7 | 0.5 | 0.5 | 4 | 3 | 4 | 724 | 0.957 | 0.9168 |

(continued)

| Subband amplitude coefficient quantization 3bit | | | | | | | | | |
|---|---|---|---|---|---|---|---|---|---|
| L | Mv | P | beta | Reference amplitude | difference amplitude | phase | bit | GCS | SGCS |
| 12 | 13 | 0.95 | 0.5 | 4 | 3 | 4 | 1424 | 0.9587 | 0.9212 |

Referring to the last row of Table 6, the number of feedback bits is 1424, and the corresponding SGCS can reach 0.9212.

It can be seen that the feedback configuration information is used to configure parameter configuration information other than the number of configurations supported by the existing standard, but the corresponding feedback bit information and the number of feedback bits may still be derived based on the codebook provisions of the existing standard. When the total number of feedback bits corresponding to the feedback configuration information is relatively high, the quantization resolution will be greatly improved, and the degree of similarity of the feedback channel information will also be improved.

It can be seen that, generally the larger the number of bits to which the feedback configuration information corresponds, the higher quantization resolution of the first channel state information.

For example, the more the DFT base vectors there are, and/or the more the amplitude bits there are, and/or the more the phase bits there are, and/or the more the time-domain base vectors there are, and/or the more the Doppler base vectors there are, and/or the larger the time delay length is, and/or the more the CSI feedback bits there are, the higher the quantization resolution of channel state information is.

In addition, the inventor finds that the quantization resolution corresponding to different parameter configuration combinations is not the same. Under different feedback parameter configurations, it is not necessarily the higher the total number of feedback bits is, the higher the quantization resolution is, but the relatively optimized configuration combination may use relatively less feedback overhead to achieve a very good quantization effect.

For example, Table 7 below shows some of the evaluation results:

Table 7

| Subband amplitude coefficient quantization 4bit | | | | | | | | | |
|---|---|---|---|---|---|---|---|---|---|
| L | Mv | P | beta | Reference amplitude | difference amplitude | phase | bit | GCS | SGCS |
| 4 | 7 | 0.5 | 0.5 | 4 | 4 | 4 | 306 | 0.913 | 0.8375 |
| 5 | 7 | 0.5 | 0.5 | 4 | 4 | 4 | 379 | 0.9313 | 0.8699 |
| 6 | 7 | 0.5 | 0.5 | 4 | 4 | 4 | 449 | 0.9434 | 0.8917 |
| 7 | 7 | 0.5 | 0.5 | 4 | 4 | 4 | 520 | 0.951 | 0.9057 |
| 8 | 7 | 0.5 | 0.5 | 4 | 4 | 4 | 590 | 0.9566 | 0.9163 |
| 9 | 7 | 0.5 | 0.5 | 4 | 4 | 4 | 660 | 0.9611 | 0.9247 |
| 10 | 7 | 0.5 | 0.5 | 4 | 4 | 4 | 730 | 0.9649 | 0.9319 |
| 12 | 13 | 0.95 | 0.5 | 4 | 4 | 4 | 1579 | 0.988 | 0.9762 |

Here, the subband amplitude adopts 4 bits, and the parameter configuration is shown in Table 7 above. For example, the performance when the total number of bits is 730 is 0.9319, which is higher than the 1424 configured in Table 6 above. By using the configuration in Table 7 corresponding to the configuration in the last row, when the total number of bits is 1579, the SGCS reaches 0.9762. This improvement is greatly related to the change of the subband amplitude coefficient quantization from 3bit to 4bit.

For example, if 4 bits is still used for the subband amplitude coefficient quantization, other parameters are changed, as shown in Table 8.

Table 8

| L | Mv | P | beta | Reference amplitude | difference amplitude | phase | bit | GCS | SGCS |
|---|---|---|---|---|---|---|---|---|---|
| 4 | 8 | 0.6 | 0.5 | 4 | 4 | 4 | 346 | 0.9185 | 0.847 |
| 4 | 9 | 0.65 | 0.5 | 4 | 4 | 4 | 386 | 0.9225 | 0.8541 |
| 4 | 10 | 0.7 | 0.5 | 4 | 4 | 4 | 425 | 0.9255 | 0.8595 |

(continued)

| L | Mv | P | beta | Reference amplitude | difference amplitude | phase | bit | GCS | SGCS |
|---|----|---|------|---------------------|----------------------|-------|-----|-----|------|
| 4 | 11 | 0.8 | 0.5 | 4 | 4 | 4 | 464 | 0.9278 | 0.8637 |
| 4 | 12 | 0.9 | 0.5 | 4 | 4 | 4 | 501 | 0.9298 | 0.8672 |
| 4 | 13 | 0.95 | 0.5 | 4 | 4 | 4 | 537 | 0.9313 | 0.87 |

As shown in Table 8, the SGCS results are also different. For example, even if the subband amplitude coefficient quantization takes 4bit and the number of bits in the last row is 537, the SGCS is still only 0.87.

In some embodiments, the network device may configure the total number of feedback bits to be large as required, that is, the total number of feedback bits is greater than a threshold value. Generally speaking, the larger the total number of feedback bits is, the higher the resolution of the CSI feedback is.

In some embodiments, the terminal equipment may combine feedback parameters of the feedback configuration information, and/or select one or more feedback parameters. As a result, better CSI resolution or quantization performance may be obtained even with the same total number of bits of feedback, or lower overhead may be achieved with the same performance.

In some embodiments, the terminal equipment may also transmit the selected feedback parameters and/or combination of parameters to the network device. The network device generates appropriate feedback configuration information based on the feedback of the terminal equipment and transmits it to the terminal equipment for CSI reporting.

In some embodiments, the above different configurations may all be indicated by different configuration IDs, and association between the configuration IDs and combination of configurations may be given by pre-definition or by RRC signaling.

In the embodiments of the present application, the codebook indication information may indicate the CSI information is generated based on which type of codebook, but the parameters configured by the network may not be consistent with those predefined in the codebook. Through the codebook indication information and the feedback configuration information, the quantization result of channel state information may be generated that is more approximate to the real channel, and more channel quantization overhead is acceptable.

In some embodiments, the feedback configuration information is represented by a configuration ID.

In some embodiments, a configuration ID corresponding to a group of combinations of at least one of the following information: information on the number of DFT base vectors, information on the number of amplitude bits, information on the number of phase bits, information on a time-domain base vector, information on a Doppler base vector, related information on latency, or related information on the number of CSI feedback bits.

Table 9 shows an example of feedback configuration information.

Table 9

| Configuration IDs | Number of DFT base vectors | Number of amplitude bits | Number of phase bits | Time-domain base vector | Doppler base vector | Delay correlation | Number of CSI feedback bits |
|---|---|---|---|---|---|---|---|
| 001 | A1 | B1 | C1 | D1 | E1 | F1 | G1 |
| 002 | A2 | B2 | C2 | D2 | E2 | F2 | G2 |
| ... | ... | ... | ... | ... | ... | ... | ... |

Table 19 shows another example of feedback configuration information.

Table 10

| Configuration IDs | Number of bits of codebook parameter 1 | Number of bits of codebook parameter 2 | Number of bits of codebook parameter 3 | Total number of CSI feedback bits |
|---|---|---|---|---|
| 001 | A11 | B11 | C11 | G11 |
| 002 | A12 | B12 | C12 | G12 |
| 003 | A13 | B13 | C13 | G11 |

(continued)

| Configuration IDs | Number of bits of codebook parameter 1 | Number of bits of codebook parameter 2 | Number of bits of codebook parameter 3 | Total number of CSI feedback bits |
|---|---|---|---|---|
| ... | ... | ... | ... | ... |

As shown in Table 9, for example, the network device may only transmit information with configuration ID = 001, the terminal equipment may know information on the number of DFT base vectors, information on the number of amplitude bits, information on the number of phase bits, information on a time-domain base vector, information on a Doppler base vector, related information on latency, or related information on the number of CSI feedback bits. As a result, the terminal equipment may feed back CSI with higher resolution. Not all column parameters are needed in Table 9, and for example, a configuration ID corresponds to one or more column parameters.

As shown in Table 10, for example, the network device may only transmit information with configuration ID = 001, then the terminal equipment may know the number of bits of one or several codebook parameters, or information on the number of CSI feedback bits. As a result, the terminal equipment may feed back CSI with higher resolution. Not all column parameters are needed in Table 10, and for example, a configuration ID corresponds to one or more column parameters.

In some embodiments, the configuration ID further corresponds to a multiple-antenna layer indication (MIMO layer indication).

In some embodiments, one feedback total bit number corresponds to multiple different codebook parameter bit configurations, and/or multiple feedback total bit numbers correspond to multiple different codebook parameter bit configurations.

For example, as shown in Table 10, more generally, different configuration IDs corresponding to different combinations of numbers of codebook parameter bits. For example, for the same total number of feedback bits, there may be different codebook parameter bit number configurations, as shown in Table 10 for configuration IDs 001 and 003. For another example, for different total numbers of feedback bits, there may be different codebook parameter bit number configurations, as shown in Table 10 for configuration IDs 001 and 002. Others may not be listed.

In some embodiments, different feedback configuration information corresponds to different feedback total bit numbers and different codebook parameters, or different feedback configuration information corresponds to identical feedback total bit numbers but different specific codebook parameters. However, the degrees of similarity or quantization resolution corresponding to different configurations are expected to be different.

Thus, by using feedback configuration information, the network device may request the terminal equipment to feedback CSI of different resolutions as needed, which may further improve the efficiency of CSI feedback.

In some embodiments, the codebook indication information indicates one of the following codebooks: Rel-15 type 2 codebook, Rel-16 type 2 codebook, Rel-18 type 2 codebook, Rel-18 other type codebook, Rel-19 codebook, or a later version of codebook, or an AI/ML specific codebook. However, the present application is not limited to this, for example, other codebooks may also be indicated.

In some embodiments, the feedback of the first channel state information is an aperiodic reporting.

For example, the network device may transmit codebook indication information and feedback configuration information to the terminal equipment, and configure the terminal equipment to report the first channel state information (high-resolution CSI), when determining the need for verification of channel state information feedback. Therefore, the first channel state information may be reported according to the need to avoid occupying too much resources and reduce the cost of the whole system.

In some embodiments, the reporting configuration further indicate the terminal equipment to perform reporting of the first channel state information based on that a rank is equal to 1 (RANK = 1).

For example, for a model based on a single layer feature vector, in addition to configuring the above codebook indication information and feedback configuration information, the network device may also configure the terminal equipment to feed back the first channel state information based on RANK = 1.

The embodiments above only schematically illustrate the present application, but the present application is not limited to this, and appropriate variations may also be made on the basis of the above embodiments. For example, the above embodiments may be used separately, or one or more of the above embodiments may be combined.

As can be seen from the above embodiments, the terminal equipment receives a reporting configuration from the network device, wherein the reporting configuration includes codebook indication information and feedback configuration information; the terminal equipment processes the channel state information according to the codebook indication information and the feedback configuration information to obtain a first channel state information; and feeds back the first channel state information to the network device. As a result, the network device may obtain more accurate CSI, thereby improving CSI feedback resolution.

Embodiments of Second Aspect

Embodiments of the present application provide a method for feeding back channel state information (CSI). The embodiments of the second aspect may be combined with the embodiments of the first aspect, or may be implemented separately, and the same content as the embodiments of the first aspect will not be repeated.

FIG. 4 is a schematic diagram of a method for feeding back channel state information in the embodiments of the present application, as shown in FIG. 4, the method including:

401: a terminal equipment receives a first reporting configuration from a network device, the first reporting configuration including feedback configuration information and similarity indication information for configuring the terminal equipment to report channel state information similarity;

402: the terminal equipment measures a channel state information reference signal to obtain channel state information;

403: the terminal equipment processes the channel state information according to the feedback configuration information to obtain first channel state information, and calculates similarity information based on channel state information to which the feedback configuration information corresponds; and

404: the terminal equipment feeds back the first channel state information and/or the similarity information to the network device.

It is worth noting that FIG. 4 above only schematically illustrates the embodiments of the present application, but the present application is not limited to this. For example, the order of execution between operations may be adjusted appropriately, and some other operations may be added or one or more opearations may be removed. Those skilled in the art may make appropriate variations in accordance with the above contents, and which is not limited to the disclosure of FIG. 4 above.

In the embodiments of the present application, the network device configures not only feedback configuration information but also similarity indication information, so that the network device may obtain not only high-resolution CSI (first channel state information) but also similarity information, which may be used for verification of the AI/ML model, for example, the high-resolution CSI and/or similarity information may be used as label data of the AI/ML model. As a result, the network device may obtain more accurate CSI, thereby improving CSI feedback resolution.

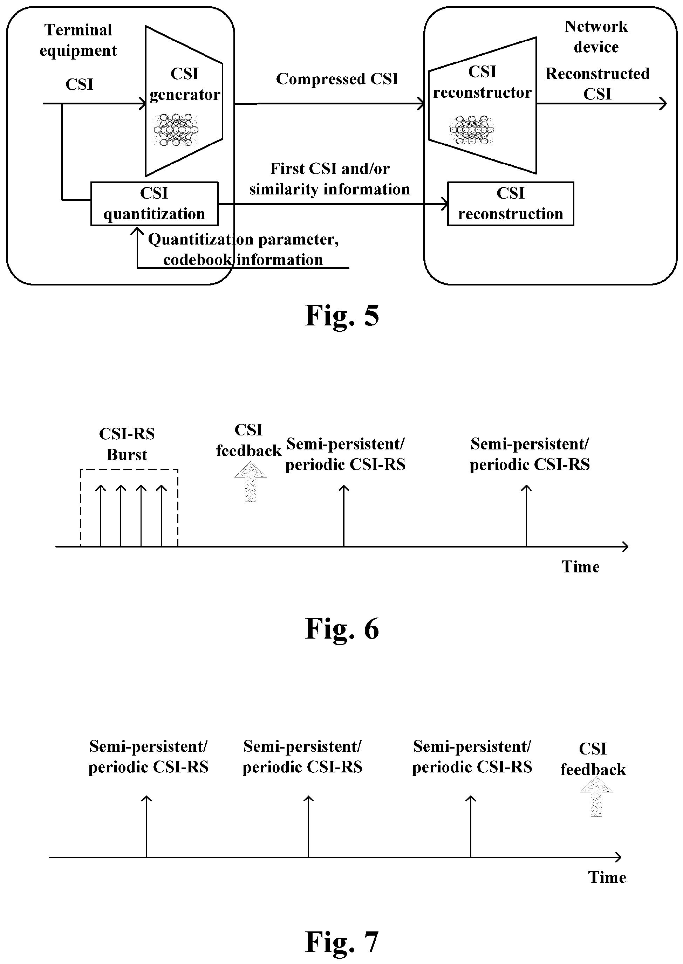

FIG. 5 is an exemplary diagram of feeding back channel state information in the embodiments of the present application. As shown in FIG. 5, for example, the terminal equipment may utilize the AI/ML algorithm (such as a CSI compression neural network in a CSI generator) to compress the channel state information, and the compressed CSI is transmitted by the terminal equipment to the network device. The network device utilizes the corresponding AI/ML algorithm (such as a CSI decompression neural network in a CSI reconstructor) to reconstruct the channel state information.

Due to the rich diversity and variability of wireless channels, the channel information used by the neural networks in the CSI generator and in the CSI reconstructor during training may be inconsistent with the features of the channel information in the wireless environment where it is applied, resulting in low resolution of the channel state information reconstructed by the CSI reconstructor, or in other words, there is a high degree of inconsistency (that is, low degree of similarity) with the actual corresponding channel state information.

In order to determine the resolution of the channel state information reconstructed by the CSI reconstructor, the network device may configure and schedule the terminal equipment to feed back the channel state information with high resolution. Such highly resolution channel state information may be used as annotation data (i.e., a ground truth label) to determine the performance of the CSI generator /CSI reconstructor.

For example, the network device may transmit feedback configuration information and/or similarity indication information to the terminal equipment. As shown in FIG. 5, the terminal equipment may obtain corresponding parameters (such as quantization parameters, codebook information, etc.) based on the feedback configuration information, then process the channel state information to obtain the first channel state information (such as high-resolution CSI), and calculate the similarity information based on the similarity indication information. The network device may reconstruct the first channel state information and/or the similarity information after obtaining them, and use the reconstructed information for verification of the CSI generator /the CSI reconstructor.

For example, the information may be used to fine-tune the AI/ML model; for another example, the information may be used to monitor the AI/ML model; for another example, the information may be used for online or offline training of the AI/ML model, etc.; which is not limited in the present application.

FIG. 5 only exemplarily illustrates the embodiments of the present application, but the present application is not limited to this, for example, the first channel state information and/or the similarity information may also be used for the verification of non-AI /ML channel state information feedback. In addition, FIG. 5 may also be applicable to the foregoing embodiments of the first aspect or the following embodiments of the third aspect.

In some embodiments, the similarity information is calculated based on the channel state information to which the feedback configuration information corresponds and the channel state information estimated by using the channel state information reference signal (CSI-RS).

For example, the terminal equipment quantifies the channel state information according to the feedback configuration information, obtains the high-resolution channel state information and feeds it back to the network device via the uplink channel. In addition, the terminal equipment also calculates the degree of similarity between the high-resolution channel state information and the channel state information before quantization. The representation of this degree of similarity is predefined or configured, for example, may be represented by GCS, SGCS, etc.

Here, GCS or SGCS may represent the degree of similarity of the channel state information before and after quantization, as shown in Table 11:

Table 11

$$ GCS = E\left\{ \frac{1}{N} \sum_{i=1}^{N} \sum_{j}^{K} \frac{\|\widetilde{w}_i^{jH} w_i^j\|}{\|\widetilde{w}_i^j\| \ \|w_i^j\|} \right\}, \ SGCS = E\left\{ \frac{1}{N} \sum_{i=1}^{N} \sum_{j}^{K} \left( \frac{\|\widetilde{w}_i^{jH} w_i^j\|}{\|\widetilde{w}_i^j\| \ \|w_i^j\|} \right)^2 \right\} $$

Note: $w_i^j$ is the $j^{th}$ eigenvector of the target CSI at resource unit i and K is the rank. $\widetilde{w}_j$ is the $j^{th}$ output vector of the output CSI of resource unit i. **N** is the total number of resource units. **E**$\{\cdot\}$ denotes the average operation over multiple samples.

For example, it may be simply understood that such a metric represents the similarity of the channel state information before and after quantization. For the CSI feedback of the terminal equipment, in addition to the feedback information itself, the network device wants to know the similarity between the quantized CSI information and the channel information before being quantized, before passing through the air interface. This value helps the network device to utilize the label data to verify the performance of CSI information reconstruction performed by the AI/ML model.

In some embodiments, the similarity information is represented by multiple bits.

In some embodiments, the similarity is represented based on a predefined rule, or the similarity is represented based on configuration of radio resource control signaling (RRC).

For example, the similarity information also needs to be quantified, which may be based on a predefined rule. For example, N bits may be used for indication, with different N bits corresponding to different degrees of similarity.

For example, bits 00 corresponds to the similarity of 0.9, 01 corresponds to the similarity of 0.95, 10 corresponds to the similarity of 0.98, and 11 corresponds to the similarity of 0.99; and so on. The above is only an example of the embodiments of the present application, and there may also be other ways, which is not limited in the present application.

In some embodiments, the feedback configuration information includes at least one piece of the following information: information on the number of DFT base vectors, information on the number of amplitude bits, information on the number of phase bits, information on a time-domain base vector, information on a Doppler base vector, related information on latency, or related information on the number of CSI feedback bits.

In some embodiments, one feedback total bit number corresponds to multiple different codebook parameter bit configurations, and/or multiple feedback total bit numbers correspond to multiple different codebook parameter bit configurations.

For example, different feedback configuration information corresponds to different combinations of numbers of codebook parameter bits. For example, for the same total number of feedback bits, there may be different codebook parameter bit number configurations; for another example, for different total numbers of feedback bits, there may be different codebook parameter bit number configurations, and others may not be listed. The codebook parameters may specifically be the parameters in the above embodiments, or other possible codebook parameters for quantifying the channel information.

In some embodiments, the feedback configuration information is represented by a configuration ID.

In some embodiments, a configuration ID corresponding to a group of combinations of at least one of the following information: information on the number of DFT base vectors, information on the number of amplitude bits, information on the number of phase bits, information on a time-domain base vector, information on a Doppler base vector, related information on latency, or related information on the number of CSI feedback bits.

In some embodiments, the configuration ID further corresponds to a multiple-antenna layer indication (MIMO layer indication).

In some embodiments, the terminal equipment may also receive second reporting configuration from the network device; generate second channel state information based on the second reporting configuration; and feed back the second channel state information to the network device.

For example, the second channel state information is generated by using an AI/ML-based channel state information generation mode, or the second channel state information is generated by using an AI/ML codebook-based channel state information generation mode, or the second channel state information is generated by using a channel state information generation mode with a low amount of feedback information.

In some embodiments, the first channel state information is channel feedback information with an uplink high payload, and the second channel state information is channel feedback information with an uplink low payload.

Therefore, the network device may receive similarity information and/or receive first CSI information and second CSI information. By comparing the difference between the first CSI information and the second CSI information, the network device may further improve the working performance of the CSI generator and the CSI reconstructor, or acquire the loss function required for the training of the CSI generator and the CSI reconstructor.

In some embodiments, the terminal equipment aperiodically feeds back the first channel state information and/or the similarity information to the network device.

In some embodiments, the terminal equipment feeds back the first channel state information and/or the similarity information to the network device semi-persistently or periodically for many times.

For example, the network device may configure the terminal equipment to perform feedback of the high-resolution CSI information for many times, and the report type may be semi-persistent or periodic. The network device may monitor the performance of the AI/ML model based on multiple times of high-resolution CSI, or fine-tune AI/ML model parameters.

In some embodiments, the terminal equipment receives a set of CSI-RSs (CS-RS burst) including multiple CSI-RSs configured by the network device; and feeds back the first channel state information and/or the similarity information for the set of CSI-RSs (CS-RS burst).

FIG. 6 is an exemplary diagram of feeding back channel state information in the embodiments of the present application. The network device configures the terminal equipment to perform CSI feedback (reporting), including resource configuration and reporting configuration. As shown in FIG. 6, in resource configuration, the configuration information of the network device contains a set of CSI-RSs, also known as CSI-RS burst.

As shown in FIG. 6, in one reporting configuration, the terminal equipment is configured to feed back the corresponding multiple CSIs. The reporting here is aperiodic reporting, and multiple high-resolution channel state information may be reported in one reporting, corresponding to multiple CSI-RSs in one CSI-RS burst.

In some embodiments, the interval between two adjacent CSI-RSs within the set of CSI-RSs (CS-RS burst) is smaller than a normal CSI-RS period. For example, the duration of the CSI-RS burst is very short and may be much smaller than the normal CSI-RS period.

For example, the normal CSI-RS period is 4 slots; the set of CSI-RSs (CS-RS burst) are transmitted in one time window; the time window is 1 slot, or 4 slots, or 5 ms. However, the present application is not limited to this. For another example, the CS-RS burst refers to multiple CSI-RSs transmitted densely, wherein the interval between two CSI-RSs is smaller than the smallest CSI-RS period, perhaps smaller than one slot.

In some embodiments, the terminal equipment receives multiple CSI-RSs configured by the network device; and feeds back the first channel state information and/or the similarity information for the multiple CSI-RSs.

FIG. 7 is another exemplary diagram of feeding back channel state information in the embodiments of the present application. The network device configures the terminal equipment to perform CSI feedback (reporting), which is completed in a feedback time unit. That is, the CSI feedback may be directed at multiple CSI-RSs, feeding back multiple high-resolution CSIs at one time.

For example, the feedback time unit includes at least one of the following: a symbol, a slot, multiple slots, multiple symbols, or a subframe. The present application is not limited to this, and the specific length of the feedback time unit may be determined according to actual needs.

In some embodiments, the feedback time unit is configured by RRC signaling, the present application is not limited to this.

The embodiments above only schematically illustrate the present application, but the present application is not limited to this, and appropriate variations may also be made on the basis of the above embodiments. For example, the above embodiments may be used separately, or one or more of the above embodiments may be combined.

As can be seen from the above embodiments, the terminal equipment receives the first reporting configuration from the network device, the first reporting configuration including feedback configuration information and similarity indication information; obtains the first channel state information based on the feedback configuration information, and calculates the similarity information based on the similarity indication information; and feeds back the first channel state information and/or the similarity information to the network device. As a result, the network device may obtain more accurate CSI, thereby improving CSI feedback resolution.

Embodiments of Third Aspect

Embodiments of the present application provide a method for feeding back channel state information (CSI). The embodiments of the third aspect may be combined with the embodiments of the first and second aspects, or may be implemented separately, and the same content as the embodiments of the first and second aspects will not be repeated.

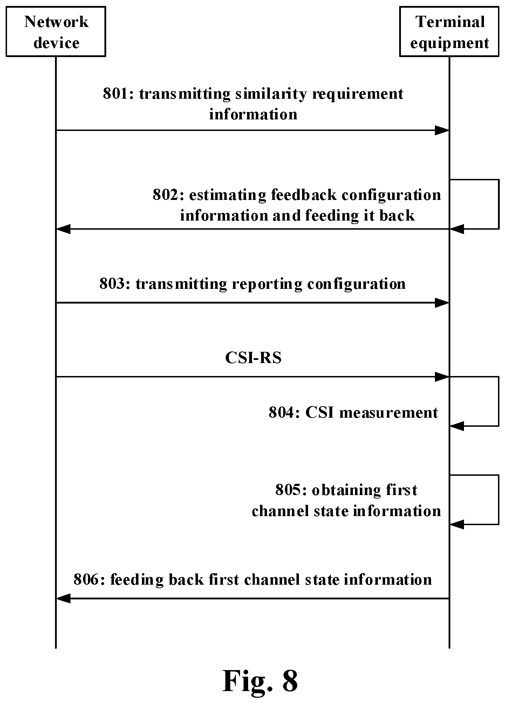

FIG. 8 is a schematic diagram of a method for feeding back channel state information in the embodiments of the present application, as shown in FIG. 8, the method including:

> 801: a terminal equipment receives similarity requirement information from a network device;
> 802: the terminal equipment estimates feedback configuration information used for channel state information reporting according to the similarity requirement information, and feeds back the feedback configuration information to the network device;
> 803: the terminal equipment receives reporting configuration information of first channel state information transmitted by the network device, wherein the reporting configuration information is generated by the network device according to the feedback configuration information fed back by the terminal equipment;
> 804: the terminal equipment measures a channel state information reference signal to obtain channel state information;
> 805: the terminal equipment processes the channel state information according to the reporting configuration information and/or the feedback configuration information to obtain the first channel state information; and
> 806: the terminal equipment feeds back the first channel state information to the network device.

It is worth noting that FIG. 8 above only schematically illustrates the embodiments of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 8 above.

In the embodiments of the present application, consideration is given to that the combination of different codebook parameters may result in different similarities for a total number of feedback bits. This is due to the feature of the channel. The feature of the channel may be estimated by the terminal equipment by using CSI-RS.

Therefore, the network device may transmit the similarity requirement information to the terminal equipment according to the accuracy requirements of the label data monitored by the model or trained by the model. According to the channel information estimated by the terminal equipment using CSI-RS, based on the similarity requirement information transmitted by the network device, the feedback configuration information that may achieve the similarity is estimated by the terminal equipment. The feedback configuration information includes the number of bits corresponding to the individual codebook parameters and/or the total number of feedback bits, and the terminal equipment feeds back the feedback configuration information to the network device. The network device further transmits the CSI reporting configuration to the terminal equipment based on this feedback configuration information. In this way, the channel state information reporting of the terminal equipment may not only meet the needs of quantization resolution or similarity degree of the network device, but also use the optimal bit combination of codebook parameters and the total number of feedback bits for feedback.

In the embodiments of the present application, the network device transmits the similarity requirement information and the terminal equipment estimates the feedback configuration information, so that the network device may obtain high-resolution CSI (first channel state information), which may be used for verification of the AI/ML model, and for example, the high-resolution CSI may be used as label data of the AI/ML model. As a result, the network device may obtain more accurate CSI, thereby improving CSI feedback resolution.

In some embodiments, the similarity requirement information is used to indicate the terminal equipment that: the degree of similarity between the channel state information that the network device expects the terminal equipment to feed back and the channel state information estimated by the terminal equipment based on the channel state information reference signal (CSI-RS).

For example, the representation of this degree of similarity is predefined or configured, for example, may be represented by GCS, SGCS, etc. Reference may be made to tables 2 and 4 above. The similarity requirement information may be represented by multiple bits, for example, the similarity may be represented based on the predefined rule, or the similarity may be represented based on a configuration of radio resource control (RRC) signaling.

For example, N bits may be used for indication, with different N bits corresponding to different degrees of similarity.

For example, bits 00 corresponds to the similarity of 0.9, 01 corresponds to the similarity of 0.95, 10 corresponds to the similarity of 0.98, and 11 corresponds to the similarity of 0.99; and so on. The above is only an example of the embodiments of the present application, and there may also be other ways, which is not limited in the present application.

In some embodiments, the terminal equipment, based on the similarity requirement information, calculates the feedback configuration information required to meet the requirement and feeds it back to the network device.

For example, the network device may transmit the similarity requirement information corresponding to certain channel state information to the terminal equipment, and cause the terminal equipment to estimate the feedback configuration information (such as quantized information parameters) required to achieve the similarity information according to the corresponding similarity information.

In some embodiments, the feedback configuration information includes at least one of the following information: information on the number of DFT base vectors, information on the number of amplitude bits, information on the number of phase bits, information on a time-domain base vector, information on a Doppler base vector, related information on latency, or related information on the number of CSI feedback bits.

In some embodiments, the feedback configuration information is represented by a configuration ID.

In some embodiments, a configuration ID is corresponding to a group of combinations of at least one of the following information: information on the number of DFT base vectors, information on the number of amplitude bits, information on the number of phase bits, information on a time-domain base vector, information on a Doppler base vector, related information on latency, or related information on the number of CSI feedback bits.

In some embodiments, the configuration ID further corresponds to a multiple-antenna layer indication (MIMO layer indication).

In this way, the network device may transmit the similarity requirement information and generate reporting configuration information based on the feedback configuration information that is fed back by the terminal equipment. The terminal equipment obtains the first channel state information based on the reporting configuration information and/or the feedback configuration information, and then feeds it back to the network device. The working performance of the CSI generator and the CSI reconstructor may be further improved, or the loss function required for the training of the CSI generator and the CSI reconstructor may be acquired.

In some embodiments, the terminal equipment aperiodically feeds back the first channel state information to the network device.

In some embodiments, the terminal equipment feeds back the first channel state information to the network device semi-persistently or periodically for many times.

For example, the network device may configure the terminal equipment to perform feedback of the high-resolution CSI information for many times, and the report type may be semi-persistent or periodic. The network device may monitor the performance of the AI/ML model based on multiple times of high-resolution CSI, or fine-tune AI/ML model parameters.

In some embodiments, the terminal equipment receives a set of CSI-RSs (CS-RS burst) including multiple CSI-RSs configured by the network device; and feeds back the first channel state information for the set of CSI-RSs (CS-RS burst). Reference can be made to FIG. 6 above for details.

In some embodiments, the interval between two adjacent CSI-RSs within the set of CSI-RSs (CS-RS burst) is smaller than a normal CSI-RS period. For example, the duration of the CSI-RS burst is very short and may be much smaller than the normal CSI-RS period.

For example, the normal CSI-RS period is 4 slots; the set of CSI-RSs (CS-RS burst) are transmitted in one time window; the time window is 1 slot, or 4 slots, or 5 ms. However, the present application is not limited to this.

In some embodiments, the terminal equipment receives multiple CSI-RSs configured by the network device; and feeds back the first channel state information for the multiple CSI-RSs. The feedback is completed in one feedback time unit. That is, the CSI feedback may be directed at multiple CSI-RSs, feeding back multiple high-resolution CSIs at one time. Reference may be made to FIG. 7 above for details.

For example, the feedback time unit includes at least one of the following: a symbol, a slot, multiple slots, multiple symbols, or a subframe. The present application is not limited to this, and the specific length of the feedback time unit may be determined according to actual needs.

In some embodiments, the feedback time unit is configured by RRC signaling; the present application is not limited to this.

The embodiments above only schematically illustrate the present application, but the present application is not limited to this, and appropriate variations may also be made on the basis of the above embodiments. For example, the above embodiments may be used separately, or one or more of the above embodiments may be combined.

As can be seen from the above embodiments, the network device transmits the similarity requirement information and generates reporting configuration information based on the feedback configuration information that is fed back by the terminal equipment. The terminal equipment obtains the first channel state information based on the reporting configuration information and/or the feedback configuration information, and then feeds it back to the network device. As a result, the network device can obtain more accurate CSI, thereby improving CSI feedback resolution.

Embodiments of Fourth Aspect

Embodiments of the present application provide an apparatus for feeding back channel state information (CSI). The apparatus may be, for example, a terminal equipment, or one or more parts or components configured in the terminal equipment, and the same content as the embodiments of the first to third aspects will not be repeated.

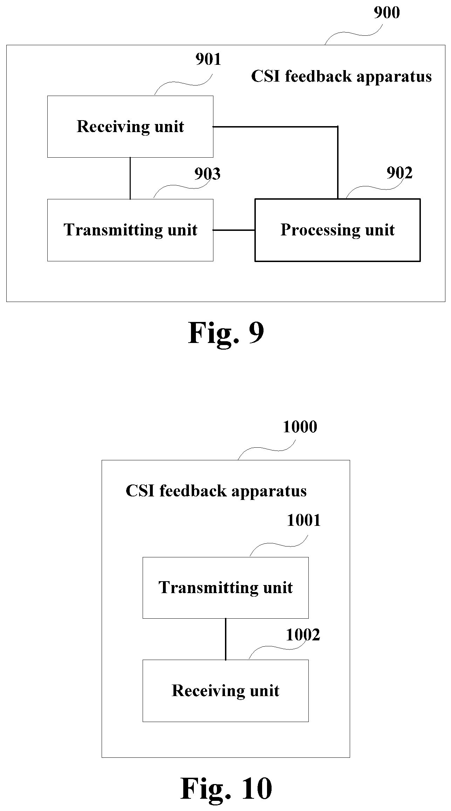

FIG. 9 is a schematic diagram of an apparatus for feeding back channel state information in the embodiments of the present application. As shown in FIG. 9, a channel state information feedback apparatus 900 includes a receiving unit 901, a processing unit 902 and a transmitting unit 903.

In some embodiments, the receiving unit 901 receives a reporting configuration from a network device, wherein the reporting configuration includes codebook indication information and feedback configuration information;

the processing unit 902 measures a channel state information reference signal to obtain channel state information, and processes the channel state information according to the codebook indication information and the feedback configuration information to obtain a first channel state information; and

the transmitting unit 903 feeds back the first channel state information to the network device.

In some embodiments, the feedback configuration information includes at least one of the following information: information on the number of DFT base vectors, information on the number of amplitude bits, information on the number of phase bits, information on a time-domain basevector, information on a Doppler base vector, related information on latency, or related information on the number of CSI feedback bits.

In some embodiments, the feedback configuration information is used to indicate a mode of quantizing channel state information by the terminal equipment; and processing the channel state information includes: quantifying the channel state information and generating feedback bit information based on the feedback configuration information and according to a predefined rule in a codebook to which the codebook indication information corresponds.

In some embodiments, the larger the number of bits to which the feedback configuration information corresponds, the higher quantization resolution of the first channel state information.

In some embodiments, the feedback configuration information is represented by a configuration ID.

A configuration ID corresponding to a group of combinations of at least one of the following information: information on the number of DFT base vectors, information on the number of amplitude bits, information on the number of phase bits, information on a time-domain base vector, information on a Doppler base vector, related information on latency, or relataed information on the number of CSI feedback bits; and/or, the configuration ID further corresponding to a multiple-antenna layer indication.

In some embodiments, different feedback configuration information corresponds to different feedback total bit numbers and/or quantization resolutions.

In some embodiments, the feedback of the first channel state information is an aperiodic reporting.

In some embodiments, the reporting configuration further indicates the terminal equipment to perform reporting of the first channel state information based on that a rank is equal to 1 (RANK=1).

In some embodiments, the receiving unit 901 receives first reporting configuration from a network device, the first reporting configuration including feedback configuration information and similarity indication information for configuring a terminal equipment to report channel state information similarity;

the processing unit 902 measures channel state information reference signal to obtain channel state information, processes the channel state information according to the feedback configuration information to obtain first channel state information, and calculates similarity information based on channel state information to which the feedback configuration information corresponds; and

the transmitting unit 903 feeds back the first channel state information and/or the similarity information to the network device.

In some embodiments, the similarity information is calculated based on the channel state information to which the feedback configuration information corresponds and the channel state information estimated by using the channel state information reference signal (CSI-RS).

In some embodiments, the similarity information is represented by multiple bits; wherein the similarity is represented based on a predefined rule, or the similarity is represented based on configuration of radio resource control (RRC) signaling.

In some embodiments, the receiving unit 901 further receives second reporting configuration from the network device;

the processing unit 902 generates second channel state information based on the second reporting configuration; and

the transmitting unit 903 feeds back the second channel state information to the network device.

In some embodiments, the second channel state information is generated by using an AI/ML-based channel state information generation mode, or the second channel state information is generated by using an AI/ML codebook-based channel state information generation mode, or the second channel state information is generated by using a channel state information generation mode with a low amount of feedback information.

In some embodiments, the first channel state information is channel feedback information with an uplink high payload, and the second channel state information is channel feedback information with an uplink low payload.

In some embodiments, the transmitting unit 903 feeds back the first channel state information and/or the similarity information to the network device semi-persistently or periodically for many times.

In some embodiments, the receiving unit 901 receives a set of CSI-RSs (CSI-RS burst) consisting of multiple CSI-RSs configured by the network device; and the transmitting unit 903 feeds back the first channel state information and/or the similarity information for the set of CSI-RSs (CSI-RS burst).

In some embodiments, the interval between two adjacent CSI-RSs within the set of CSI-RSs (CSI-RS burst) is smaller than a normal CSI-RS period.

In some embodiments, the receiving unit 901 receives multiple CSI-RSs configured by the network device; and the transmitting unit 903 feeds back the first channel state information and/or the similarity information for the multiple CSI-RSs.

In some embodiment, the feedback is completed in one feedback time unit;

wherein the feedback time unit includes at least one of the following: a symbol, a slot, multiple slots, multiple symbols, or a subframe;
the feedback time unit is configured via RRC signaling.

In some embodiments, the receiving unit 901 receives similarity requirement information from a network device;

the processing unit 902 estimates feedback configuration information used for channel state information reporting according to the similarity requirement information; and
the transmitting unit 903 feeds back the feedback configuration information to the network device;
the receiving unit 901 further receiving reporting configuration information of first channel state information transmitted by the network device, wherein the reporting configuration information is generated by the network device according to the feedback configuration information fed back by the terminal equipment;
the processing unit 902 measuring a channel state information reference signal to obtain channel state information, and processing the channel state information according to the reporting configuration information and/or the feedback configuration information to obtain the first channel state information; and
the transmitting unit 903 feeds back the first channel state information to the network device.

The embodiments above only schematically illustrate the present application, but the present application is not limited to this, and appropriate variations may also be made on the basis of the above embodiments. For example, the above embodiments may be used separately, or one or more of the above embodiments may be combined.

It is worth noting that only the components or modules related to the present application are illustrated hereinabove, but the present application is not limited to this. The channel state information feedback apparatus 900 may further include other components or modules, and the details of these components or modules may be seen by referring to the related art.

**In** addition, for the sake of simplicity, FIG. 9 only exemplarily shows the connection relationship or signal trend between the individual components or modules, but it should be clear to those skilled in the art that various related techniques such as bus connections may be employed. The above individual components or modules may be implemented by hardware facilities such as a processor, a memory, a transmitter, a receiver, etc., which is not limited in the present application.

Through the embodiments of the present application, the network device may obtain more accurate CSI, thereby improving CSI feedback resolution.

Embodiments of Fifth Aspect

Embodiments of the present application provide an apparatus for feeding back channel state information (CSI). The apparatus may be, for example, a network device, or one or more parts or components configured in the network device, and the same content as the embodiments of the first to third aspects will not be repeated.

FIG. 10 is a schematic diagram of an apparatus for feeding back channel state information in the embodiments of the present application. As shown in FIG. 10, a channel state information feedback apparatus 1000 includes a transmitting unit 1001 and a receiving unit 1002.

**In** some embodiments, the transmitting unit 1001 transmits a reporting configuration to the terminal equipment, wherein the reporting configuration includes codebook indication information and feedback configuration information; and the receiving unit 1002 receives first channel state information fed back from the terminal equipment.

**In** some embodiments, the transmitting unit 1001 transmits a first reporting configuration to the terminal equipment, wherein the first reporting configuration includes feedback configuration information and similarity indication information for configuring a terminal equipment to report channel state information similarity; and the receiving unit 1002 receives the first channel state information and/or the similarity information fed back from the terminal equipment.

**In** some embodiments, the transmitting unit 1001 transmits the similarity requirement information to the terminal equipment; the receiving unit 1002 receives the feedback configuration information used for channel state information reporting that is estimated by the terminal equipment according to the similarity requirement information; and the reporting configuration information is generated according to the feedback configuration information fed back by the terminal equipment;

the transmitting unit 1001 further transmits the reporting configuration information to the terminal equipment; and the receiving unit 1002 receives the first channel state information fed back by the terminal equipment.

The embodiments above only schematically illustrate the present application, but the present application is not limited to this, and appropriate variations may also be made on the basis of the above embodiments. For example, the above embodiments may be used separately, or one or more of the above embodiments may be combined.

It is worth noting that only the components or modules related to the present application are illustrated hereinabove, but the present application is not limited to this. The channel state information feedback apparatus 1000 may further include other components or modules, and the details of these components or modules may be seen by referring to the related art.

In addition, for the sake of simplicity, FIG. 10 only exemplarily shows the connection relationship or signal trend between the individual components or modules, but it should be clear to those skilled in the art that various related techniques such as bus connections may be employed. The above individual components or modules may be implemented by hardware facilities such as a processor, a memory, a transmitter, a receiver, etc., which is not limited in the present application.

Through the embodiments of the present application, the network device may obtain more accurate CSI, thereby improving CSI feedback resolution.

Embodiments of Sixth Aspect

The embodiments of the present application further provide a communication system, referring to FIG. 1, the same content as the embodiments in the first to five aspects will not be repeated.

In some embodiments, the communication system 100 may include at least:

a terminal equipment configured to receive a reporting configuration from a network device, wherein the reporting configuration includes codebook indication information and feedback configuration information; measure a channel state information reference signal to obtain channel state information; process the channel state information according to the codebook indication information and the feedback configuration information to obtain a first channel state information; and feed back the first channel state information to the network device;

a network device configured to transmit a reporting configuration to the terminal equipment, wherein the reporting configuration includes codebook indication information and feedback configuration information; and receive first channel state information fed back from the terminal equipment.

In some embodiments, the communication system 100 may include at least:

a terminal equipment configured to receive a first reporting configuration from a network device, the first reporting configuration including feedback configuration information and similarity indication information for configuring a terminal equipment to report channel state information similarity; measure a channel state information reference signal to obtain channel state information; process the channel state information according to the feedback configuration information to obtain first channel state information, and calculate similarity information based on channel state information to which the feedback configuration information corresponds; and feed back the first channel state information and/or the similarity information to the network device;

a network device configured to transmit a first reporting configuration to the terminal equipment, wherein the first reporting configuration includes feedback configuration information and similarity indication information for configuring a terminal equipment to report channel state information similarity; and receive the first channel state information and/or the similarity information fed back from the terminal equipment.

In some embodiments, the communication system 100 may include at least:

a terminal equipment configured to receive similarity requirement information from a network device; estimate feedback configuration information used for channel state information reporting according to the similarity requirement information, and feed back the feedback configuration information to the network device; receive reporting configuration information of first channel state information transmitted by the network device; measure a channel state information reference signal to obtain channel state information; process the channel state information according to the reporting configuration information and/or the feedback configuration information to obtain first channel state information; and feed back the first channel state information and/or the similarity information to the network device; a network device configured to transmit the similarity requirement information to the terminal equipment; receive the feedback configuration information used for channel state information reporting that is estimated by the terminal equipment according to the similarity requirement information; generate the reporting configuration information according to the feedback configuration information fed back by the terminal equipment; transmit the reporting configuration information to the terminal equipment; and receive first channel state information fed back from the terminal equipment.

The embodiments of the present application further provide a network device, which may be, for example, a base station, but which is not limited in the present application, and may also be other network devices.

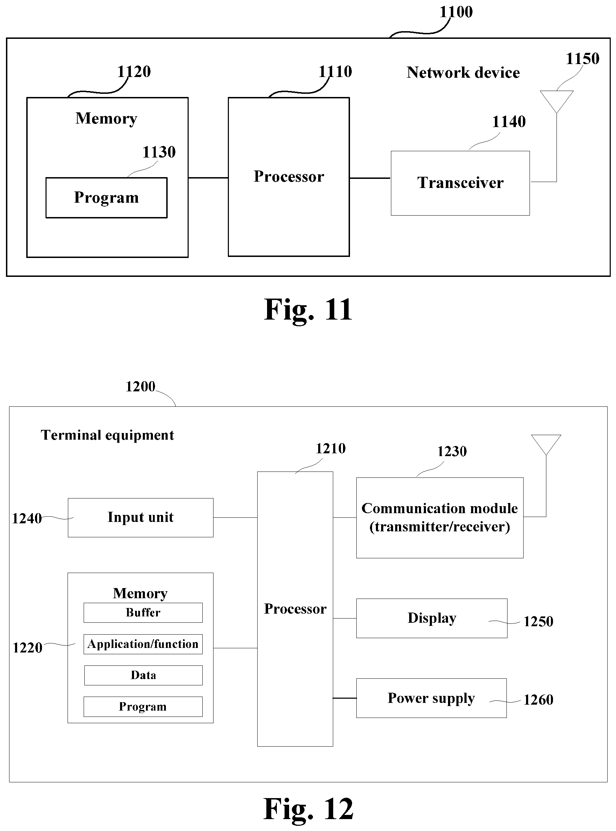

FIG. 11 is a schematic diagram of composition of the network device in the embodiments of the present application. As shown in FIG. 11, the network device 1100 may include a processor 1110 (such as a central processing unit (CPU)) and a memory 1120; the memory 1120 is coupled to the processor 1110. The memory 1120 may store various data and also may store the information processing program 1130, and the program 1130 is executed under the control of the processor 1110.

For example, the processor 1110 may be configured to execute the program to implement the method for feeding back channel state information as described in the embodiments of the first aspect. For example, the processor 1110 may be configured to perform the following controls of: transmitting a reporting configuration to the terminal equipment, wherein the reporting configuration includes codebook indication information and feedback configuration information; and receiving first channel state information fed back from the terminal equipment.

For example, the processor 1110 may be configured to execute the program to implement the method for feeding back channel state information as described in the embodiments of the second aspect. For example, the processor 1110 may be configured to perform the following controls of: transmitting a first reporting configuration to the terminal equipment, wherein the first reporting configuration includes feedback configuration information and similarity indication information for configuring a terminal equipment to report channel state information similarity; and receiving the first channel state information and/or the similarity information fed back from the terminal equipment.

For example, the processor 1110 may be configured to execute the program to implement the method for feeding back channel state information as described in the embodiments of the third aspect. For example, the processor 1110 may be configured to perform the following controls of: transmitting the similarity requirement information to the terminal equipment; receiving the feedback configuration information used for channel state information reporting that is estimated by the terminal equipment according to the similarity requirement information; generating the reporting configuration information according to the feedback configuration information fed back by the terminal equipment; transmitting the reporting configuration information to the terminal equipment; and receiving first channel state information fed back from the terminal equipment.

In addition, as shown in FIG. 11, the network device 1100 may further include: a transceiver 1140 and an antenna 1150, etc.; wherein the functions of the above components are similar to the relevant art, and will not be repeated here. It is worth noting that the network device 1100 is not necessarily required to include all of the components shown in FIG. 11; in addition, the network device 1100 may further include components not shown in FIG. 11, with reference to the relevant art.

The embodiments of the present application further provide a terminal equipment, but which is not limited in the present application, and may also be other devices.

FIG. 12 is a schematic diagram of a terminal equipment in the embodiments of the present application. As shown in FIG. 12, the terminal equipment 1200 may include a processor 1210 and a memory 1220; the memory 1220 stores data and program, and is coupled to the processor 1210. It is worth noting that this figure is exemplary; other types of structures may also be used in addition to or instead of the structure to implement telecommunications functions or other functions.

For example, the processor 1210 may be configured to execute the program to implement the method for feeding back channel state information as described in the embodiments of the first aspect. For example, the processor 1210 may be configured to perform the following controls of: receiving a reporting configuration from a network device, wherein the reporting configuration includes codebook indication information and feedback configuration information; measuring a channel state information reference signal to obtain channel state information; processing the channel state information according to the codebook indication information and the feedback configuration information to obtain a first channel state information; and feeding back the first channel state information to the network device.

For example, the processor 1210 may be configured to execute the program to implement the method for feeding back channel state information as described in the embodiments of the second aspect. For example, the processor 1210 may be configured to perform the following controls of: receiving a first reporting configuration from a network device, the first reporting configuration including feedback configuration information and similarity indication information for configuring a terminal equipment to report channel state information similarity; measuring a channel state information reference signal to obtain channel state information; processing the channel state information according to the feedback configuration information to obtain first channel state information, and calculating similarity information based on channel state information to which the feedback configuration information corresponds; and feeding back the first channel state information and/or the similarity information to the network device.

For example, the processor 1210 may be configured to execute the program to implement the method for feeding back channel state information as described in the embodiments of the third aspect. For example, the processor 1210 may be configured to perform the following controls of: receiving similarity requirement information from a network device; estimating feedback configuration information used for channel state information reporting according to the similarity requirement information, and feeding back the feedback configuration information to the network device; receiving reporting configuration information of first channel state information transmitted by the network device, wherein the reporting configuration information is generated by the network device according to the feedback configuration information fed back by the terminal equipment; measuring a channel state information reference signal to obtain channel state information; processing the channel state information according to the reporting configuration information and/or the feedback configuration information to obtain first channel state information; and feeding back the first channel state information and/or the similarity information to the network device.

As shown in FIG. 12, the terminal equipment 1200 may further include a communication module 1230, an input unit 1240, a display 1250, and a power supply 1260. The functions of the above components are similar to the prior art, and will not be repeated here. It is worth noting that the terminal equipment 1200 is not necessarily required to include all of the components shown in FIG. 12, and the above components are not essential; in addition, the terminal equipment 1200 may further include components not shown in FIG. 12, with reference to the relevant art.

The embodiments of the present application further provide a computer program which, when being executed in the terminal equipment, causes the terminal equipment to execute the method for feeding back channel state information (CSI) described in the embodiments of the first to third aspects.

The embodiments of the present application further provide a storage medium storing a computer program which causes the terminal equipment to execute the method for feeding back channel state information (CSI) described in the embodiments of the first to third aspects.

The embodiments of the present application further provide a computer program which, when being executed in the network device, causes the network device to execute the method for feeding back channel state information (CSI) described in the embodiments of the first to third aspects.

The embodiments of the present application further provide a storage medium storing a computer program which causes the network device to execute the method for feeding back channel state information (CSI) described in the embodiments of the first to third aspects.

The above devices and methods of the present application can be implemented by hardware or by hardware combined with software. The present application relates to a computer readable program which, when being executed by a logic unit, enables the logic unit to implement the devices or components mentioned above, or enables the logic unit to implement the methods or steps described above. The present application also relates to storage medium for storing the above programs, such as a hard disk, a magnetic disk, a compact disc, a DVD, a flash memory, etc.

The method/device described in conjunction with the embodiments of the present application may be directly embodied as hardware, a software module executed by the processor, or a combination of both. For example, one or more of the functional block diagrams and/or combination thereof shown in the drawing may correspond to both software modules and hardware modules of the computer program flow. These software modules can correspond to the steps shown in the drawings respectively. These hardware modules can be realized, for example, by solidifying these software modules using field programmable gate arrays (FPGA).

The software module may reside in an RAM memory, a flash memory, an ROM memory, an EPROM memory, an EEPROM memory, a register, a hard disk, a removable disk, a CD-ROM, or a storage medium in any other form known in the art. A storage medium can be coupled to a processor so that the processor can read information from the storage medium and write information to the storage medium; or the storage medium can be a constituent part of the processor. The processor and the storage medium can be located in the ASIC. The software module can be stored in the memory of the mobile terminal or in a memory card that can be inserted into the mobile terminal. For example, if a device (such as a mobile terminal) uses a large-capacity MEGA-SIM card or a large-capacity flash memory device, the software module can be stored in the MEGA-SIM card or the large-capacity flash memory device.

One or more of the functional blocks and/or combination thereof shown in the drawing may be implemented as a general-purpose processor, a digital signal processor (DSP), an application-specific integrated circuit (ASIC), a field programmable gate array (FPGA) or other programmable logic device, a discrete gate or a transistor logic device, a discrete hardware component, or any appropriate combination thereof, for performing the functions described in the present application. One or more of the functional blocks and/or combination thereof shown in the drawing may also be implemented as combination of computing devices, such as combination of DSP and a microprocessor, multiple microprocessors, one or more microprocessors combined with DSP communication, or any other such configuration.

The present application is described in combination with specific embodiments hereinabove, but a person skilled in the art should know clearly that the description is exemplary, but not limitation to the protection scope of the present application. A person skilled in the art can make various variations and modifications to the present application according to spirit and principle of the application, and these variations and modifications should also be within the scope of the present application.

For implementation including the above embodiments, the following appendices are further disclosed:

1. A method for feeding back channel state information (CSI), including:

a terminal equipment receives a reporting configuration from a network device, wherein the reporting configuration includes codebook indication information and feedback configuration information;
the terminal equipment measures a channel state information reference signal to obtain channel state information;
processing the channel state information according to the codebook indication information and the feedback configuration information to obtain a first channel state information; and
feeding back the first channel state information to the network device.

2. The method according to the appendix 1, wherein the feedback configuration information includes at least one of the following information: information on the number of DFT base vectors, information on the number of amplitude bits, information on the number of phase bits, information on a time-domain base vector, information on a Doppler base vector, related information on latency, or related information on the number of CSI feedback bits.

3. The method according to the appendix 1 or 2, wherein the feedback configuration information is used to indicate a mode of quantizing channel state information by the terminal equipment,
and that process the channel state information includes: quantifying the channel state information and generating feedback bit information based on the feedback configuration information and according to a predefined rule in a codebook to which the codebook indication information corresponds.

4. The method according to any of the appendices 1 to 3, wherein the larger the number of bits to which the feedback configuration information corresponds, the higher quantization resolution of the first channel state information.

5. The method according to any of the appendices 1 to 4, wherein the feedback configuration information is represented by configuration IDs.

6. The method according to the appendix 5, wherein a configuration ID corresponding to a group of combinations of at least one of the following information: information on the number of DFT base vectors, information on the number of amplitude bits, information on the number of phase bits, information on a time-domain base vector, information on a Doppler base vector, related information on latency, or related information on the number of CSI feedback bits.

7. The method according to the appendix 5 or 6, wherein the configuration ID further corresponds to a multiple-antenna layer indication.

8. The method according to any of the appendices 5 to 7, wherein different configuration IDs corresponding to different combinations of numbers of codebook parameter bits.

9. The method according to any of the appendices 1 to 8, wherein one feedback total bit number corresponds to multiple different codebook parameter bit configurations, and/or multiple feedback total bit numbers correspond to multiple different codebook parameter bit configurations.

10. The method according to any of the appendices 1 to 9, wherein different feedback configuration information corresponds to different feedback total bit numbers and/or quantization resolutions.

11. The method according to any of the appendices 1 to 10, wherein different feedback configuration information corresponds to different feedback total bit numbers and different codebook parameters, or different feedback configuration information corresponds to identical feedback total bit numbers and different codebook parameters.

12. The method according to any of the appendices 1 to 11, wherein the codebook indication information indicates one of the following codebooks: Rel-15 type 2 codebook, Rel-16 type 2 codebook, Rel-18 type 2 codebook, Rel-18 other type codebook, Rel-19 codebook, or a later version of codebook, or an AI/ML specific codebook.

13. The method according to any of the appendices 1 to 12, wherein the feedback of the first channel state information is an aperiodic reporting.

14. The method according to any of the appendices 1 to 13, wherein the reporting configuration further indicates the terminal equipment to perform reporting of the first channel state information based on that a rank is equal to 1 (RANK=1).

15. The method according to any of the appendices 1 to 14, wherein the network device configures channel state information feedback with a feedback total bit number greater than a normal value for the terminal equipment by using the feedback configuration information.

16. The method according to any of the appendices 1 to 15, wherein the terminal equipment combines feedback parameters of the feedback configuration information, and/or selects one or more feedback parameters.

17. The method according to the appendix 15, wherein the terminal equipment transmits the selected feedback parameters and/or combination of parameters to the network device.

18. The method according to the appendix 16 or 17, wherein the selected feedback parameters and/or combination of parameters are represented by configuration IDs; wherein association between the configuration IDs and the feedback parameters and/or combination of parameters is predefined, or is configured by RRC signaling.

19. A method for feeding back channel state information (CSI), including:

a terminal equipment receives a first reporting configuration from a network device, the first reporting configuration including feedback configuration information and similarity indication information for configuring a terminal equipment to report channel state information similarity;

the terminal equipment measures a channel state information reference signal to obtain channel state information;

processing the channel state information according to the feedback configuration information to obtain first channel state information, and calculating similarity information based on channel state information to which the feedback configuration information corresponds; and

feeding back the first channel state information and/or the similarity information to the network device.

20. The method according to the appendix 19, wherein the similarity information is calculated based on the channel state information to which the feedback configuration information corresponds and the channel state information estimated by using the channel state information reference signal (CSI-RS).

21. The method according to the appendix 19 or 20, wherein the similarity information is represented by multiple bits.

22. The method according to the appendix 21, wherein the similarity is represented based on a predefined rule, or the similarity is represented based on configuration of radio resource control (RRC) signaling.

23. The method according to any of the appendices 19 to 22, wherein the feedback configuration information includes at least one of the following information: information on the number of DFT base vectors, information on the number of amplitude bits, information on the number of phase bits, information on a time-domain base vector, information on a Doppler base vector, related information on latency, or related information on the number of CSI feedback bits.

24. The method according to any of the appendices 19 to 23, wherein the feedback configuration information is represented by configuration IDs.

25. The method according to the appendix 24, wherein a configuration ID corresponding to a group of combinations of at least one of the following information: information on the number of DFT base vectors, information on the number of amplitude bits, information on the number of phase bits, information on a time-domain base vector, information on a Doppler base vector, related information on latency, or related information on the number of CSI feedback bits.

26. The method according to the appendix 24 or 25, wherein the configuration ID further corresponds to a multiple-antenna layer indication.

27. The method according to any of the appendices 24 to 26, wherein different configuration IDs corresponding to different combinations of numbers of codebook parameter bits.

28. The method according to any of the appendices 19 to 27, wherein one feedback total bit number corresponds to multiple different codebook parameter bit configurations, and/or multiple feedback total bit numbers correspond to multiple different codebook parameter bit configurations.

29. The method according to any of the appendices 19 to 28, wherein different feedback configuration information corresponds to different feedback total bit numbers and/or quantization resolutions.

30. The method according to any of the appendices 19 to 29, wherein different feedback configuration information corresponds to different feedback total bit numbers and different codebook parameters, or different feedback configuration information corresponds to identical feedback total bit numbers and different codebook parameters.

31. The method according to any of the appendices 19 to 30, wherein the method further includes:

the terminal equipment receives second reporting configuration from the network device;

generating second channel state information based on the second reporting configuration; and

feeding back the second channel state information to the network device.

32. The method according to the appendix 31, wherein the second channel state information is generated by using an AI/ML-based channel state information generation mode, or the second channel state information is generated by using an AI/ML codebook-based channel state information generation mode, or the second channel state information is generated by using a channel state information generation mode with a low amount of feedback information.

33. The method according to the appendix 31, wherein the first channel state information is channel feedback information with an uplink high payload, and the second channel state information is channel feedback information with an uplink low payload.

34. The method according to any of the appendices 19 to 33, wherein the terminal equipment feeds back the first channel state information and/or the similarity information to the network device semi-persistently or periodically for many times.

35. The method according to any of the appendices 19 to 33, wherein the method further includes:

the terminal equipment receives a set of CSI-RSs (CSI-RS burst) including multiple CSI-RSs configured by the network device; and
feeds back the first channel state information and/or the similarity information for the set of CSI-RSs (CSI-RS burst).

36. The method according to the appendix 35, wherein the interval between two adjacent CSI-RSs within the set of CSI-RSs (CSI-RS burst) is smaller than a normal CSI-RS period.

37. The method according to the appendix 36, wherein the normal CSI-RS period is 4 slots; the set of CSI-RSs (CSI-RS burst) are transmitted in one time window; the time window is 1 slot, or 4 slots, or 5 ms.

38. The method according to any of the appendices 19 to 33, wherein the method further includes:

the terminal equipment receives multiple CSI-RSs configured by the network device; and
feeds back the first channel state information and/or the similarity information for the multiple CSI-RSs.

39. The method according to any of the appendices 35 to 38, wherein the feedback is completed in a feedback time unit.

40. The method according to the appendix 39, wherein the feedback time unit includes at least one of the following: a symbol, a slot, multiple slots, multiple symbols, or a subframe.

41. The method according to the appendix 39, wherein the feedback time unit is configured via RRC signaling.

42. A method for feeding back channel state information (CSI), including:

a terminal equipment receives similarity requirement information from a network device;
estimating feedback configuration information used for channel state information reporting according to the similarity requirement information, and feeding back the feedback configuration information to the network device;
the terminal equipment receives reporting configuration information of first channel state information transmitted by the network device, wherein the reporting configuration information is generated by the network device according to the feedback configuration information fed back by the terminal equipment;
the terminal equipment measures a channel state information reference signal to obtain channel state information;
the terminal equipment processes the channel state information according to the reporting configuration information and/or the feedback configuration information to obtain the first channel state information; and
feeding back the first channel state information to the network device.

43. The method according to the appendix 42, wherein the similarity requirement information is used to indicate the terminal equipment of the degree of similarity between the channel state information that the network device expects the terminal equipment to feed back and the channel state information estimated by the terminal equipment based on the channel state information reference signal (CSI-RS).

44. The method according to the appendix 42, wherein the terminal equipment, based on the similarity requirement information, calculates the feedback configuration information required to meet the requirement and feeds it back to the network device.

45. The method according to any of the appendices 42 to 44, wherein the feedback configuration information includes at least one of the following information: information on the number of DFT base vectors, information on the number of amplitude bits, information on the number of phase bits, information on a time-domain base vector, information on a Doppler base vector, related information on latency, or related information on the number of CSI feedback bits.

46. The method according to any of the appendices 42 to 45, wherein the feedback configuration information is represented by configuration IDs.

47. The method according to the appendix 46, wherein a configuration ID corresponding to a group of combinations of at least one of the following information: information on the number of DFT base vectors, information on the number of amplitude bits, information on the number of phase bits, information on a time-domain base vector, information on a Doppler base vector, related information on latency, or related information on the number of CSI feedback bits.

48. The method according to the appendix 46 or 47, wherein the configuration ID further corresponds to a multiple-antenna layer indication.

49. The method according to any of the appendices 46 to 48, wherein different configuration IDs corresponding to different combinations of numbers of codebook parameter bits.

50. The method according to any of the appendices 42 to 49, wherein one feedback total bit number corresponds to multiple different codebook parameter bit configurations, and/or multiple feedback total bit numbers correspond to multiple different codebook parameter bit configurations.

51. The method according to any of the appendices 42 to 50, wherein different feedback configuration information corresponds to different feedback total bit numbers and/or quantization resolutions.

52. The method according to any of the appendices 42 to 51, wherein different feedback configuration information corresponds to different feedback total bit numbers and different codebook parameters, or different feedback configuration information corresponds to identical feedback total bit numbers and different codebook parameters.

53. The method according to any of the appendices 42 to 52, wherein the feedback of the first channel state information is an aperiodic reporting.

54. The method according to any of the appendices 42 to 52, wherein the terminal equipment feeds back the first channel state information to the network device semi-persistently or periodically for many times.

55. The method according to any of the appendices 42 to 52, wherein the method further includes:

the terminal equipment receives a set of CSI-RSs (CSI-RS burst) including multiple CSI-RSs configured by the network device; and
feeds back the first channel state information for the set of CSI-RSs (CSI-RS burst).

56. The method according to the appendix 55, wherein the interval between two adjacent CSI-RSs within the set of CSI-RSs (CSI-RS burst) is smaller than a normal CSI-RS period.

57. The method according to the appendix 56, wherein the normal CSI-RS period is 4 slots; the set of CSI-RSs (CSI-RS burst) are transmitted in one time window; the time window is 1 slot, or 4 slots, or 5 ms.

58. The method according to any of the appendices 42 to 52, wherein the method further includes:

the terminal equipment receives multiple CSI-RSs configured by the network device; and
feeds back the first channel state information for the multiple CSI-RSs.

59. The method according to any of the appendices 55 to 58, wherein the feedback is completed in a feedback time unit.

60. The method according to the appendix 59, wherein the feedback time unit includes at least one of the following: a symbol, a slot, multiple slots, multiple symbols, or a subframe.

61. The method according to the appendix 59, wherein the feedback time unit is configured via RRC signaling.

62. A method for feeding back channel state information (CSI), including:

a network device transmits a reporting configuration to a terminal equipment, wherein the reporting configuration includes codebook indication information and feedback configuration information; and
the network device receives first channel state information fed back from the terminal equipment.

63. A method for feeding back channel state information (CSI), including:

a network device transmits a first reporting configuration to a terminal equipment, the first reporting configuration including feedback configuration information and similarity indication information for configuring a terminal equipment to report channel state information similarity;
the network device receives first channel state information and/or similarity information fed back from the terminal equipment.

64. A method for feeding back channel state information (CSI), including:

a network device transmits the similarity requirement information to the terminal equipment;

the network device receives the feedback configuration information used for channel state information reporting that is estimated by the terminal equipment according to the similarity requirement information;

the network device generates the reporting configuration information according to the feedback configuration information fed back by the terminal equipment;

the network device transmits the reporting configuration information to the terminal equipment; and

the network device receives first channel state information fed back from the terminal equipment.

65. A terminal equipment including a memory storing a computer program and a processor configured to execute the computer program to implement the method for feeding back channel state information according to any of the appendices 1 to 61.

66. A network device including a memory storing a computer program and a processor configured to execute the computer program to implement the method for feeding back channel state information according to any of the appendices 62 to 64.

## Claims

1. An apparatus for feeding back channel state information, comprising:

   a receiving unit configured to receive a reporting configuration from a network device, wherein the reporting configuration comprises codebook indication information and feedback configuration information;

   a processing unit configured to measure a channel state information reference signal to obtain channel state information, and process the channel state information according to the codebook indication information and the feedback configuration information to obtain a first channel state information; and

   a transmitting unit configured to feed back the first channel state information to the network device.

2. The apparatus according to claim 1, wherein the feedback configuration information comprises at least one of the following information: information on the number of DFT base vectors, information on the number of amplitude bits, information on the number of phase bits, information on a time-domain base vector, information on a Doppler base vector, related information on latency, or related information on the number of channel state information feedback bits.

3. The apparatus according to claim 1, wherein the feedback configuration information is used to indicate a mode of quantizing channel state information by the terminal equipment,

   and that process the channel state information comprises: quantifying the channel state information and generating feedback bit information based on the feedback configuration information and according to a predefined rule in a codebook to which the codebook indication information corresponds.

4. The apparatus according to claim 1, wherein the larger the number of bits to which the feedback configuration information corresponds, the higher quantization resolution of the first channel state information.

5. The apparatus according to claim 1, wherein the feedback configuration information is represented by configuration IDs,

   a configuration ID corresponding to a group of combinations of at least one of the following information: information on the number of DFT base vectors, information on the number of amplitude bits, information on the number of phase bits, information on a time-domain base vector, information on a base Doppler vector, related information on latency, or related information on the number of channel state information feedback bits; and/or, the configuration ID further corresponding to a multiple-antenna layer indication,

   and different configuration IDs corresponding to different combinations of numbers of codebook parameter bits.

6. The apparatus according to claim 1, wherein one feedback total bit number corresponds to multiple different codebook parameter bit configurations, and/or multiple feedback total bit numbers correspond to multiple different codebook parameter bit configurations;

   and different feedback configuration information corresponds to different feedback total bit numbers and/or quantization resolutions, or different feedback configuration information corresponds to different feedback total bit numbers and different codebook parameters, or different feedback configuration information corresponds to identical feedback total bit numbers and different codebook parameters.

7. The apparatus according to claim 1, wherein the feedback of the first channel state information is an aperiodic reporting, and/or,
the report configuration is further used to indicate the terminal equipment to perform reporting of the first channel state information based on that a rank is equal to 1.

8. The apparatus according to claim 1, wherein the network device configures channel state information feedback with a feedback total bit number greater than a normal value for the terminal equipment by using the feedback configuration information, and/or,
the terminal equipment combines feedback parameters of the feedback configuration information, and/or selects one or more feedback parameters.

9. An apparatus for feeding back channel state information, comprising:

a receiving unit configured to receive first reporting configuration from a network device, the first reporting configuration comprising feedback configuration information and similarity indication information for configuring a terminal equipment to report channel state information similarity;
a processing unit configured to measure channel state information reference signal to obtain channel state information, process the channel state information according to the feedback configuration information to obtain first channel state information, and calculate similarity information based on channel state information to which the feedback configuration information corresponds; and
a transmitting unit configured to feed back the first channel state information and/or the similarity information to the network device.

10. The apparatus according to claim 9, wherein the similarity information is calculated based on the channel state information to which the feedback configuration information corresponds and the channel state information estimated by using the channel state information reference signal.

11. The apparatus according to claim 10, wherein the similarity information is represented by multiple bits;
wherein the similarity is represented based on a predefined rule, or the similarity is represented based on configuration of radio resource control signaling.

12. The apparatus according to claim 9, wherein the receiving unit is further configured to receive second reporting configuration from the network device;

the processing unit is configured to generate second channel state information based on the second reporting configuration;
and the transmitting unit is configured to feed back the second channel state information to the network device.

13. The apparatus according to claim 12, wherein the second channel state information is generated by using an AI/ML-based channel state information generation mode, or the second channel state information is generated by using an AI/ML codebook-based channel state information generation mode, or the second channel state information is generated by using a channel state information generation mode with a low amount of feedback information.

14. The apparatus according to claim 12, wherein the first channel state information is channel feedback information with an uplink high payload, and the second channel state information is channel feedback information with an uplink low payload.

15. The apparatus according to claim 9, wherein the transmitting unit is configured to feed back the first channel state information and/or the similarity information to the network device semi-persistently or periodically for many times.

16. The apparatus according to claim 9, wherein,

the receiving unit is configured to receive a set of CSI-RSs comprising multiple channel state information reference signals and configured by the network device;
and the transmitting unit is configured to feed back the first channel state information and/or the similarity information for the set of CSI-RSs.

17. The apparatus according to claim 16, wherein an interval between two adjacent CSI-RSs in the set of CSI-RSs is less than a normal CSI-RS period.

18. The apparatus according to claim 9, wherein,

the receiving unit is configured to receive multiple channel state information reference signals configured by the network device;
and the transmitting unit is configured to feed back the first channel state information and/or the similarity information for the multiple channel state information reference signals.

19. The apparatus according to claim 18, wherein the feedback is completed in a feedback time unit;

wherein the feedback time unit comprises at least one of the following: a symbol, a slot, multiple slots, multiple symbols, or a subframe;
the feedback time unit is configured via radio resource control signaling.

20. An apparatus for feeding back channel state information, comprising:

a receiving unit configured to receive similarity requirement information from a network device;
a processing unit configured to estimate feedback configuration information used for channel state information reporting according to the similarity requirement information; and
a transmitting unit configured to feeds back the feedback configuration information to the network device;
the receiving unit is further configured to receive reporting configuration information of first channel state information transmitted by the network device, wherein the reporting configuration information is generated by the network device according to the feedback configuration information fed back by the terminal equipment;
the processing unit is configured to measure a channel state information reference signal to obtain channel state information, and process the channel state information according to the reporting configuration information and/or the feedback configuration information to obtain the first channel state information; and
and the transmitting unit is configured to feed back the first channel state information to the network device.

**Fig. 1**

**Fig. 2**

**Fig. 3**

**Fig. 4**

**Fig. 5**

**Fig. 6**

**Fig. 7**

**Fig. 8**

900

901

CSI feedback apparatus

Receiving unit

903

902

Transmitting unit

Processing unit

**Fig. 9**

1000

CSI feedback apparatus

1001

Transmitting unit

1002

Receiving unit

**Fig. 10**

**Fig. 11**

**Fig. 12**

## INTERNATIONAL SEARCH REPORT

| International application No. |
| --- |
| **PCT/CN2022/123569** |

| | |
| --- | --- |
| **A.** | **CLASSIFICATION OF SUBJECT MATTER** |
| | H04L27/00(2006.01)i |

According to International Patent Classification (IPC) or to both national classification and IPC

| | |
| --- | --- |
| **B.** | **FIELDS SEARCHED** |

Minimum documentation searched (classification system followed by classification symbols)

IPC：H04L，H04W

Documentation searched other than minimum documentation to the extent that such documents are included in the fields searched

Electronic data base consulted during the international search (name of data base and, where practicable, search terms used)

CNPAT; CNKI; EPODOC; WPI; 3GPP: 码书, 码本, 信道状态信息, 上报, 报告, 反馈, 配置, DFT向量基, 幅值比特数, 相位比特数, 时域基向量, 多普勒基向量, 时延, 反馈比特数, Codebook, Channel State Information, CSI, Reporting, Feedback, Configuration, DFT Vector Basis, Number of Magnitude Bits, Number of Phase Bits, Time Domain Basis Vector, Doppler Basis Vector, Latency, Number of Feedback Bits

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | CN 110912589 A (SAMSUNG ELECTRONICS CO., LTD.) 24 March 2020 (2020-03-24) description, paragraph [0018] | 1, 7 |
| Y | CN 110912589 A (SAMSUNG ELECTRONICS CO., LTD.) 24 March 2020 (2020-03-24) description, paragraph [0018] | 2-6, 8, 9-20 |
| Y | WO 2011100822 A1 (RESEARCH IN MOTION LIMITED) 25 August 2011 (2011-08-25) description, paragraph [0025] | 9-20 |
| Y | WO 2022151084 A1 (GUANGDONG OPPO MOBILE TELECOMMUNICATIONS CORP., LTD.) 21 July 2022 (2022-07-21) description, paragraphs [0096]-[0102] | 2-6, 8 |
| A | WO 2021102917 A1 (NOKIA SHANGHAI BELL CO., LTD. et al.) 03 June 2021 (2021-06-03) entire document | 1-20 |

| | |
| --- | --- |
| ☐ Further documents are listed in the continuation of Box C. | ☑ See patent family annex. |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 May 2023** | **24 May 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2022/123569**

| Patent document cited in search report | | | Publication date (day/month/year) | Patent family member(s) | | | Publication date (day/month/year) |
|---|---|---|---|---|---|---|---|
| CN | 110912589 | A | 24 March 2020 | KR | 20140108793 | A | 15 September 2014 |
| | | | | KR | 101978776 | B1 | 16 May 2019 |
| | | | | JP | 2016512006 | A | 21 April 2016 |
| | | | | JP | 6495187 | B2 | 03 April 2019 |
| | | | | EP | 2773051 | A2 | 03 September 2014 |
| | | | | EP | 2773051 | A3 | 24 December 2014 |
| | | | | US | 2014241274 | A1 | 28 August 2014 |
| | | | | US | 9871639 | B2 | 16 January 2018 |
| | | | | WO | 2014133280 | A1 | 04 September 2014 |
| | | | | US | 2019379514 | A1 | 12 December 2019 |
| | | | | US | 11044065 | B2 | 22 June 2021 |
| | | | | US | 2018069680 | A1 | 08 March 2018 |
| | | | | US | 10396964 | B2 | 27 August 2019 |
| | | | | CN | 105052049 | A | 11 November 2015 |
| WO | 2011100822 | A1 | 25 August 2011 | EP | 2442509 | A1 | 18 April 2012 |
| | | | | EP | 2442509 | B1 | 08 May 2013 |
| | | | | EP | 2357767 | A1 | 17 August 2011 |
| | | | | EP | 2357767 | B1 | 09 May 2012 |
| | | | | AT | 557503 | T | 15 May 2012 |
| | | | | CA | 2787987 | A1 | 25 August 2011 |
| | | | | US | 2011200081 | A1 | 18 August 2011 |
| | | | | CN | 102763447 | A | 18 August 2011 |
| WO | 2022151084 | A1 | 21 July 2022 | None | | | |
| WO | 2021102917 | A1 | 03 June 2021 | CN | 114747250 | A | 12 July 2022 |

Form PCT/ISA/210 (patent family annex) (July 2022)